# EUROPEAN PATENT APPLICATION

(11) **EP 4 764 634 A1**
(43) Date of publication of application: **24.06.2026**
(21) Application number: 24386144.0
(22) Date of filing: 18.12.2024
(51) Int. Cl.: G02B 6/255, G06T 7/00, G02B 6/02

(54) **ADAPTIVE HOLLOW CORE FIBER SPLICING CALIBRATION**

(71) Applicant: Microsoft Technology Licensing, LLC, Redmond, WA 98052-6399 (US)
(72) Inventor: Bakhtiari Gorajoobi, Shahab, Redmond, WA 98052 (US); Bawn, Simon Michael, Redmond, WA 98052 (US); Gholizadeh, Abdolbaset, Redmond, WA 98052 (US)
(74) Representative: CMS Cameron McKenna Nabarro Olswang LLP

(57) **Abstract**

An apparatus and method for adaptively calibrating a splicer are described. The method comprises receiving a first image of a portion of a hollow core fiber, the hollow core fiber comprising a splice produced by the splicer, wherein the portion of the hollow core fibre in the first image is proximate to the splice. The first image is analysed to detect a feature associated with the first image, the feature representing a property of the portion of the hollow core fibre. Using the feature, an adjustment to be made to a parameter of the splicer is computed, wherein the adjustment is computed so as to target one or more of a reduced optical propagation loss and a higher strength, of a subsequent splice of hollow core fiber which is produced by the splicer after initiating the adjustment. The method further comprises initiating the adjustment of the parameter of the splicer.

## Description

### BACKGROUND

Splicing is typically used to join optical fibers, and there are various splicing methods that may be used, including fusion splicing and mechanical splicing. Prior to splicing, an optical fiber is cleaved. Splicing involves aligning the fibers end-to-end and fixing them in the aligned position. Fusion splicing, for example, joins the fibers by heating the end region in order to soften the glass from which the fibers are made. By pressing the ends together, the softened glass is made to fuse so that the fibers are permanently connected when the glass cools and hardens. Mechanical splicing, in contrast, does not permanently join the fibers together but instead uses a mechanical arrangement to maintain their aligned position and hold the fiber ends together. The join formed by splicing two fibers together is referred to as a splice. The quality of the splice is an important factor in enabling low loss optical propagation for light travelling from one fiber to the other.

The embodiments described below are not limited to implementations which solve any or all of the disadvantages of known fiber splicing methods and apparatus.

### SUMMARY

The following presents a simplified summary of the disclosure in order to provide a basic understanding to the reader. This summary is not intended to identify key features or essential features of the claimed subject matter nor is it intended to be used to limit the scope of the claimed subject matter. Its sole purpose is to present a selection of concepts disclosed herein in a simplified form as a prelude to the more detailed description that is presented later.

An apparatus and method for adaptively calibrating a splicer are described. The method comprises receiving a first image of a portion of a hollow core fiber, the hollow core fiber comprising a splice produced by the splicer, wherein the portion of the hollow core fibre in the first image is proximate to the splice. The first image is analysed to detect a feature associated with the first image, the feature representing a property of the portion of the hollow core fibre. Using the feature, an adjustment to be made to a parameter of the splicer is computed, wherein the adjustment is computed so as to target one or more of a reduced optical propagation loss and a higher strength, of a subsequent splice of hollow core fiber which is produced by the splicer after initiating the adjustment. The method further comprises initiating the adjustment of the parameter of the splicer.

Many of the attendant features will be more readily appreciated as the same becomes better understood by reference to the following detailed description considered in connection with the accompanying drawings.

### DESCRIPTION OF THE DRAWINGS

The present description will be better understood from the following detailed description read in light of the accompanying drawings, wherein:
FIGS. 1-3 are schematic diagrams of transverse cross-sectional views of three different examples of HCFs;
FIG. 4 is a schematic view of an example splicing apparatus;
FIGs. 5A-5C illustrate a series of side-view images of HCF splices;
FIG. 6A is a schematic diagram of an analysis system which implements an adaptive calibration method as described herein;
FIG. 6B is a flow diagram of a first example method of adaptive calibration;
FIGs. 7A and 7B are side-view images captured pre-splicing and post-splicing of a HCF;
FIG. 7C is a difference image generated from the pre-splicing and post-splicing side-view images shown in FIGs. 7A and 7B;
FIGs. 8A and 8B are side-view images captured pre-splicing and post-splicing of a HCF;
FIG. 8C is a difference image generated from the pre-splicing and post-splicing side-view images shown in FIGs. 8A and 8B;
FIGs. 9A-9B are graphs showing the relationship between the differences between pixel values of a side-view image pre- and post-splicing and a change in loss across the splice;
FIG. 9C is a graph showing the distribution of the normalized sum of differences with distance from the splice point for both a splice with low loss and a splice with high loss;
FIG. 10A is a chart relating a fusion arc power of a splicer to a change in loss across a splice;
FIG. 10B is a graph showing the relationship between a fusion arc power of a splicer and a percentage of unchanged pixels (with intensity differences below a threshold difference) between images captured pre-splicing and post-splicing;
FIG. 11 is a flow diagram of a second example method of adaptive calibration;
FIG. 12 is a flow diagram of a third example method of adaptive calibration;
FIG. 13 is a flow diagram of a fourth example method of adaptive calibration;
FIG. 14 is a flow diagram of example methods for creating a model for use in the adaptive calibration method described herein; and
FIG. 15 illustrates an exemplary computing-based device in which embodiments of the adaptive splicer calibration method described herein are implemented.

Like reference numerals are used to designate like parts in the accompanying drawings.

### DETAILED DESCRIPTION

The detailed description provided below in connection with the appended drawings is intended as a description of the present examples and is not intended to represent the only forms in which the present examples are constructed or utilized. The description sets forth the functions of the examples and the sequence of operations for constructing and operating the examples. However, the same or equivalent functions and sequences may be accomplished by different examples.

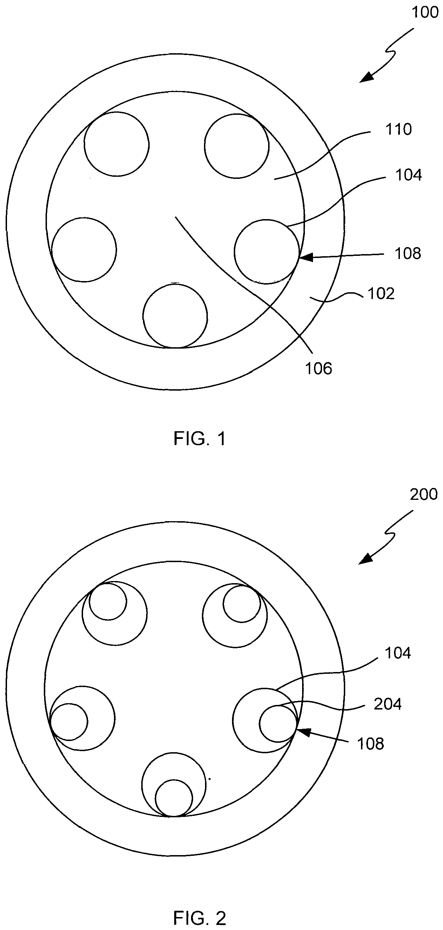

Hollow-core fibers (HCFs) are a type of microstructured optical fiber that guides light through a central hollow core, surrounded by a cladding. FIGS. 1-3 show cross-sectional views of exemplary HCF structures 100, 200, 300. Light is guided in these HCFs by an antiresonant optical effect and so these fibers may be referred to as antiresonant fibers (ARFs). Each of the fibers 100, 200, 300 comprises a tubular outer cladding (or jacket) 102, a structured, inner, cladding (referred to herein as the microstructure) comprising a plurality of tubular cladding capillaries 104, 204, 304 and a hollow core 106. The outer cladding 102 has a glass thickness that is typically much larger than that of the cladding capillaries 104, 204, 304 and in many examples is much thicker than shown in the diagrams.

In the first example, shown in FIG. 1, the structured, inner, cladding comprises five capillaries 104 of the same cross-sectional size and shape, which are arranged inside the outer cladding 102 in a single ring so that the longitudinal axes of each cladding capillary 104 and of the outer cladding 102 are substantially parallel. Each cladding capillary 104 is in contact with (e.g. bonded to) the inner surface of the outer cladding 102 at an azimuthal location 108, such that the cladding capillaries 104 are usually evenly spaced around the inner circumference of the outer cladding 102, and are also spaced apart from each other by gaps 110 (i.e. such that there is no contact between neighbouring capillaries). In some designs of HCF, the cladding capillaries 104 may be positioned in contact with each other (in other words, not spaced apart as in FIG. 1), but spacing to eliminate this contact improves the fiber's optical performance. The gaps 110 remove nodes that arise at the contact points between adjacent capillaries and which tend to cause undesirable spectral resonances that result in high transmission losses. Accordingly, fibers with spaced-apart cladding capillaries may be referred to as "nodeless antiresonant hollow core fibers". It should be appreciated that other structures of HCF do not provide an antiresonant effect or provide a different antiresonant effect.

The arrangement of the cladding capillaries 104 in a ring around the inside of the tubular outer cladding 102 creates a central space, cavity, or void within the fiber, also with its longitudinal axis parallel to those of the outer cladding 102 and the cladding capillaries 104, which is the fiber's hollow core 106. The hollow core 106 is bounded by the inwardly facing parts of the outer surfaces of the cladding capillaries 104. This is the core boundary, and the material (glass or polymer, for example) of the capillary walls that make up this boundary contributes to the antiresonance optical guidance effect or mechanism. The antiresonance optical guidance effect is provided by reflections of light in the hollow core by the core boundary, and further reflections of light in the capillary wall by a capillary boundary between a wall of the capillary and an interior space, cavity or void encompassed by the capillary. The cladding capillaries 104 have a thickness, t, at the core boundary which defines the wavelengths for which antiresonant optical guiding occurs in the HCF.

In the second example, shown in FIG. 2, each primary cladding capillary 104 has a secondary, smaller capillary 204 nested inside it, bonded to the inner surface of the primary cladding capillary 104, in this example, but not necessarily, at the same azimuthal location 108 as the point of bonding between the primary cladding capillary 104 and the outer cladding 102. These additional smaller capillaries 204 can reduce the optical loss. HCF designs of this type, with secondary capillaries, may be referred to as "nested antiresonant nodeless fibers" (NANFs), which are a type of ARF.

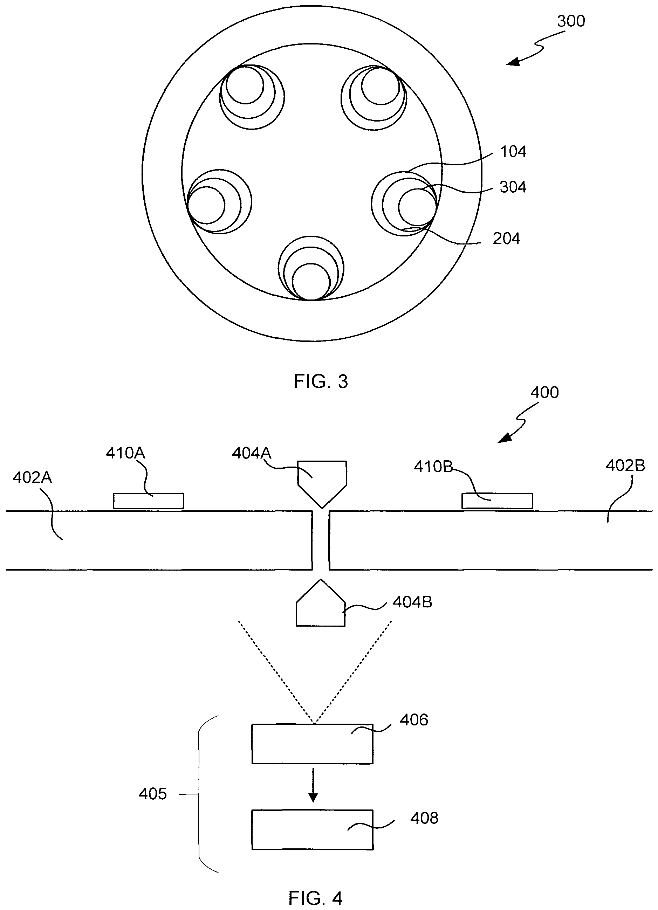

The third example, shown in FIG. 3, has two smaller cladding capillaries 204, 304 nested inside each cladding capillary 104. As with the example shown in FIG. 2, each of the smaller capillaries 204, 304 is bonded to the inner surface of the immediately larger capillary at an azimuthal location that is in some cases the point of bonding between the primary cladding capillary 104 and the outer cladding 102. In this example, the smaller capillary 204 may be referred to as the secondary cladding capillary and the smallest capillary 304 may be referred to as the tertiary cladding capillary. The tertiary cladding capillary 304 is bonded to the inner surface of the secondary cladding capillary 204 and the secondary cladding capillary 204 is bonded to the inner surface of the primary cladding capillary 104. HCF designs of this type, with secondary and tertiary cladding capillaries may be referred to as "double-nested antiresonant nodeless fibers" (DNANFs) and are a type of ARF. In yet further examples (not shown in the drawings) there may be a different configuration of cladding capillaries. For example, there may be smaller further capillaries, within the tertiary capillary 304 to provide further levels of nesting and/or there may be a plurality of secondary cladding capillaries within each primary cladding capillary, each secondary cladding capillary being bonded to the inner surface of the primary cladding capillary at a different azimuthal location and/or each primary cladding capillary may have an internal structure (e.g. one or more dividing walls).

All of the examples shown in FIGS. 1-3 comprise five primary cladding capillaries 104 and hence have five-fold rotational symmetry. Furthermore, all the cladding capillaries are circular in cross-section. In other examples, there may be a different number of primary cladding capillaries surrounding the core (e.g. four, six, seven, eight, nine or ten) and/or the cladding capillaries may not be of circular cross-section. Additionally, whilst in the examples of FIGS. 1-3, all the primary cladding capillaries 104 are of the same size and shape, in other examples, the primary cladding capillaries within the outer cladding 102 may not all be the same size and/or shape. As defined herein, reference to a HCF is in some cases reference to a HCF comprising a capillary and a hollow core, such as an ARF.

The internal microstructure of a HCF, such as shown in FIGs. 1-3, increases the complexity of splicing operations compared to solid core fibers. Any misalignment of the microstructure at the splice produces a structural discontinuity and this increases the optical loss of light propagating down the HCF and across the splice.

FIG. 4 illustrates a schematic view of an example fusion splicer (i.e. a fusion splicing apparatus). To perform a splice, an end of a first length of HCF 402A and an end of a second length of HCF 402B are inserted into the splicer 400 and secured in position using clamps or other securing mechanism 410A, 410B. The ends of the HCF may have been prepared by cleaving or other means of forming a flat face which is perpendicular to the long axis of the respective length of HCF. At least one of the two fibers are mounted on a movable stage so that the two fibers can be moved relative to each other (e.g. to align the fibers and to bring the two ends into contact). The splicer adjusts the relative position of the ends of the two HCFs 402A, 402B prior to splicing to align the ends laterally and may also perform rotational alignment. This adjustment may be performed automatically using a vision system 405 comprising a camera 406 and image analysis system 408 which controls the movable stage(s), or alternatively the adjustment may be performed manually by a user whilst viewing images of the two ends captured by the vision system 405. The camera assembly 406 is arranged to image a side-view of the HCFs 402A, 402B and/or of a produced HCF after splicing. Whilst not shown in FIG. 4, the vision system 405 may comprise light sources positioned to illuminate the fiber ends to improve the quality of the images captured by the camera 406. Whilst FIG. 4 shows a single camera 406, a splicer may comprise more than one camera.

The splicer 400 further comprises a heating element with components 404A, 404B. These are illustrated as components of a fusion splicer, though it should be appreciated that in various examples other types of splicer are used.

To splice the two ends together, the splicer 400 brings the two fiber ends close together (e.g. into contact) and causes a temporary heat-zone to occur at the contact position between the two fibers and this causes melting and joining of the HCFs. This temporary heat-zone may be created using a plasma arc between two electrodes 404A, 404B positioned either side of the fiber ends. Once the temporary heat-zone ends, the HCFs cool, leaving a spliced longer length HCF comprising the two original lengths of HCF 402A, 402B joined by a splice.

There are many parameters which are pre-defined within the splicer 400 and control the splicing operation. These parameters include the arc power, the arc duration, the gap between the two ends of the fiber prior to splicing (such as the position of the gap relative to a temporary heat-zone to be produced by the splicer during splicing, for example being adjustable to centralize, relative to the gap, damage caused by the heat-zone), the gap between the two ends of the fiber when splicing (which may be zero), the fiber movement speed, distance and/or force (e.g. when bringing the two fiber ends into contact with each other), an arc power of a pre-fuse stage performed by a fusion splicer, an arc power of a post-fuse stage performed by a fusion splicer, etc.

If the temporary heat-zone is too hot it can cause the microstructure within the component HCFs 402A, 402B to deform during the splicing operation. If the temporary heat-zone is too cool, the glass cladding of the HCFs 402A, 402B does not properly melt and the end-faces of the HCFs 402A, 402B facing each other simply slide against each other without properly joining. The heat-zone temperature is dependent upon the arc power and the arc duration and may be dependent upon other factors.

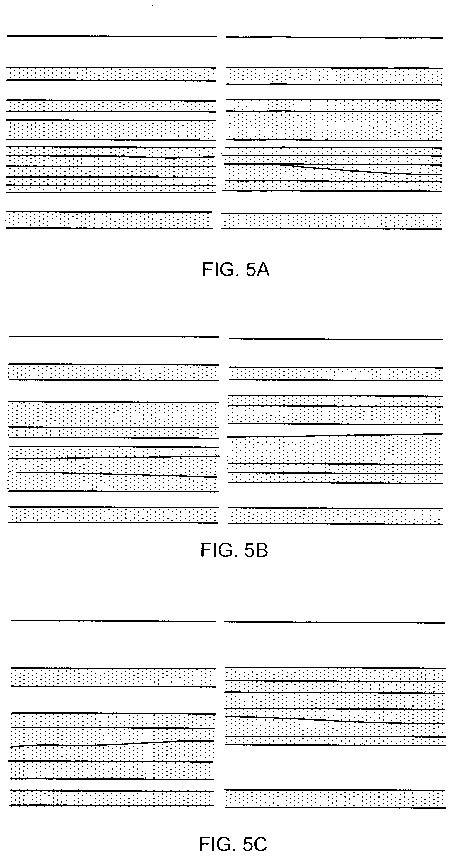

Consequently, both the parameters of the splicer 400 and the relative alignment of the internal microstructure of the two lengths of HCF affect the quality of a resulting splice after splicing, both in terms of the mechanical integrity of the splice and the optical propagation loss across the splice. A higher quality splice is associated with a lower optical propagation loss across the splice during operation (i.e. when light is directed through the HCF). A higher quality splice (i.e. a splice over which there is a lower optical propagation loss than an alternative splice) is associated with a proper join between lengths of HCF without damage to and misalignment of the microstructure within the resulting HCF after splicing, as will be elaborated upon below with respect to FIG. 5. As defined herein, a loss of or across a splice refers to an optical propagation loss of the splice.

FIGS. 5A-5C illustrate a series of side-view images of HCF splices, with microstructure properties that increasingly result in higher optical propagation losses across a respective splice. The gap in the center of each figure represents the splice between a first length of HCF on the left of the gap and a second length of HCF on the right of the gap. The filled, dotted structures represent microstructure of the respective lengths of HCF.

Misalignment in a HCF can occur in various forms, impacting the efficiency of, performance of, and loss across a splice. Rotational misalignment occurs when the rotational orientation of the nested tubes of the microstructure in one fiber does not match the orientation in the other fiber. In this example, if the nested tubes in a first HCF are rotated relative to the nested tubes in a second HCF, the tubes will not be aligned in the produced HCF after splicing, leading to increased splice loss compared to a rotationally aligned microstructure.

Other types of misalignment may occur when HCFs are spliced. Transverse misalignment refers to a lateral displacement where the centers of the fiber cores do not align. If the core of a first HCF is shifted horizontally and/or vertically relative to the core of a second HCF, when viewed from an axial perspective, the alignment of the nested tubes would be off-center, resulting in higher splice loss.

Tilt misalignment occurs when two spliced fibers are angled relative to each other instead of being perfectly parallel. This results in the nested tubes in one fiber being tilted compared to the corresponding tubes in the other fiber, leading to imperfect alignment.

Misalignment of any kind disrupts the optimal pathway for light transmission through the fiber cores and nested tubes of the microstructure of a HCF, significantly increasing splice loss. Proper alignment is important to ensure minimal splice loss.

FIG. 5A shows microstructure of a HCF post-splice across a relatively low loss splice indicated by near-optimal microstructure alignment and minimal defects. The view shown provides a horizontal cross-section of the splice, revealing that the microstructure (the dotted, filled structures) between the two portions of the HCF on either side of the splice are well-aligned, showing few visible defects or misalignment. This demonstrates the minimal splice loss in this particular splice.

FIG. 5B shows a splice with moderate loss. In this view, there are shown slight misalignments or imperfections, visually represented as variations in the alignment of the dotted, filled structures, which contributes to the increased splice loss compared to the first set. These imperfections are more pronounced than in the low-loss splice of FIG. 5A but still relatively minor.

FIG. 5C shows a splice with an even higher loss owing to significant defects or misalignment. There is shown in this view more noticeable misalignment or structural irregularities, with the dotted, filled structures appearing less consistent and more distorted, indicating a relatively poor splice quality. Were it to be measured, the higher splice loss would reflect these more substantial alignment, damage and other structural issues.

The actual splice losses may be experimentally measured by a standard method of measuring the transmitted power loss, such as using a light source and power meter or using a Bi-directional Optical Time Domain Reflectometry method.

A fusion splicer, such as the splicer 400 shown in FIG. 4, may be calibrated by performing a test splice with two lengths of solid core fiber and using the camera 406 to image the temporary heat-zone during splicing. A reference brightness (associated with an optimal splice, and being determined empirically in some cases) is pre-defined in the analysis system 408. Additionally, a brightness (for example being a pixel intensity or average pixel intensity) of a portion of one or both of the fibers being spliced within the temporary heat-zone and depicted in a captured image by the camera 406, is compared to the reference brightness. The magnitude of a difference between the reference brightness and the brightness compared to the reference brightness indicates a magnitude of a deviation from an optimal splice. Additionally, whether the difference is positive or negative can indicate a calibration to be made to affect the heat-zone. For example, if the brightness is higher than the reference brightness, wherein a higher brightness is configured to indicate a hotter region, this indicates that the temporary heat-zone is too hot, and if the brightness is lower than the reference brightness, this indicates that the temporary heat-zone is too cold. A higher brightness may be configured to indicate a hotter region than a brightness of a cooler region by a captured image being an optical image, though it should be appreciated that in some cases a lower brightness can be configured to represent a hotter region through for example digitally inverting the optical image. In either case, comparing the brightness to the reference brightness may be used to indicate a deviation of the temperature of the temporary heat-zone from an optimal temperature.

It should be appreciated that brightness as referred to herein is in some cases an indication of brightness. An adjustment is then made, based on the brightness, to a parameter of the splicer 400, for example being an adjustment to a baseline arc power and/or duration. This calibration may be performed for example on the first use of the splicer on a specific day to adjust the baseline arc power and/or duration, and the calibrated splicer is then used to perform multiple splicing operations using splicing parameters (e.g. values of the arc power and/or the arc duration) defined relative to the baseline values.

Even having calibrated a splicer using this method, changes in the environment (e.g. temperature, pressure or humidity) can affect the quality of the resultant splice and this particularly affects HCFs (as opposed to solid core fibers) as these environmental changes can affect the mode-field mismatch between the lengths of HCF being spliced. Mode-field mismatch refers to the difference in the spatial electromagnetic field distributions and propagation constants of light modes between the two cores of the respective lengths of HCF being spliced. This mismatch can lead to inefficiencies in light transmission, resulting in increased optical loss across a splice.

Described herein is an adaptive calibration method for fusion splicing hollow-core fiber which may be used in combination with, or instead of, the calibration method described above. Using the adaptive calibration method, a splice, for example each splice of a plurality of splices, that is performed can be assessed and where necessary the parameters of the splicer adjusted (e.g. by adjusting the baseline settings of the splicer or the parameters defined relative to those baseline settings) before a next splice is performed. This enables the process to react to gradual changes in environmental conditions over a period of time (e.g. temperature or humidity fluctuations over a day in the field) and/or changes in hardware conditions over a period of time (e.g. splicer component degradation such as electrode or mechanical component wear), and improves the overall quality and consistency of the splices formed using a splicing apparatus. The adaptive calibration method does not require use of test fibers (either solid core fiber or HCF), or optical measurements of the spliced fibers and so does not impact the throughput of the splicer and in fact can increase the throughput as the improved consistency reduces the number of splices that fail (e.g. in terms of physical or optical performance criteria) and hence need to be redone. This adaptive calibration method may be particularly advantageous when splicing in the field, as large numbers of splices need to be performed in succession and the environment is not well controlled (unlike in a laboratory).

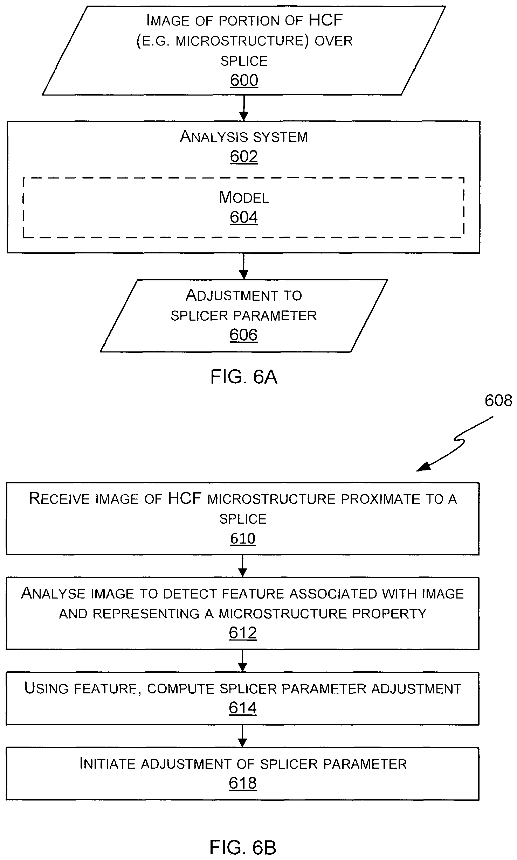

FIG. 6A illustrates a schematic diagram of an input to and output from an analysis system which implements the adaptive calibration method, and FIG. 6B illustrates a flow diagram of an example of the adaptive calibration method.

In the schematic diagram of FIG. 6A, an image 600 of microstructure of a HCF comprising a splice, wherein the microstructure shown in the image is at or proximate to the splice, is provided to or is received by analysis system 602. The image 600 is captured after splicing and may be captured by a vision system in the splicer that performed the splice operation. In some cases analysis system 602 corresponds to analysis system 408 of FIG. 4, and the image 600 is received from the camera 406 in the splicer 400 shown in FIG. 4. The analysis system 602 performs, using the image 600, the adaptive calibration method of FIG. 6B (described below) and provides an output 606 initiating an adjustment to a parameter of the splicer. The adjustment is determined so as to target one of: 1) a reduced optical propagation loss for a next splice performed by the splicer, compared to the splice of the hollow core fiber shown in image 600, or 2) a higher strength of a next splice performed by the splicer, compared to the splice of the hollow core fiber shown in image 600. More generally, the analysis system 602 provides a way of adjusting a parameter of a splicer based on an image of (i.e. showing) HCF microstructure at or proximate to a splice.

The input image 600 of a portion of HCF over a splice may show the portion of the HCF on both sides (e.g. on opposing sides) of the splice and the image may include the splice region (i.e. the region where the two HCFs contact). In other cases, the portion of the HCF shown in the image 600 may be proximate to the splice on a single side of the splice. The portion of the HCF being proximate to a splice refers to portion of the HCF being located within a first threshold distance of the splice, and/or refers to the portion of the HCF being affected by the splice, i.e. the portion of the HCF being changed as a consequence of the splice operation compared to a corresponding portion of the HCF (i.e. of components of the portion of the HCF) prior to the splice being produced. In various examples, the image 600 does not show the entirety of the splice but instead shows a portion of the splice (as described in more detail below). In various examples, the portion of the HCF is microstructure of the HCF or is outer cladding (e.g. outer cladding 102 of FIG. 1) of the HCF.

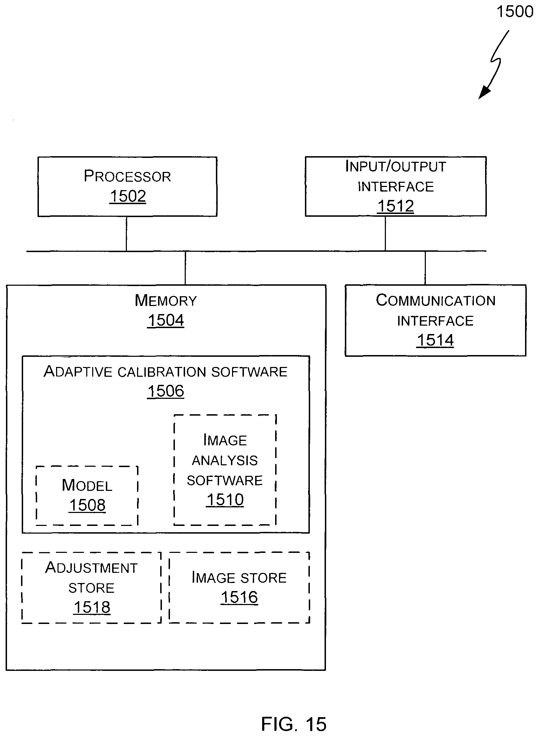

The analysis system 602 comprises a model 604, such as a machine learning model, a rule, and/or a lookup table, which is used to map a feature associated with the input image to an adjustment to a splicer parameter 606. The feature is detected by the analysis system 602 by performing a comparative analysis. The comparative analysis comprises comparing the input image 600, or a portion thereof, to a reference image which may be generated by or stored in the analysis system 602. Additionally or alternatively, the comparative analysis comprises comparing the input image 600, or a portion thereof, to a reference value or values, for example of an array, which may be generated by or stored in the analysis system 602. The reference value or values in some cases indicate a feature of the reference image, for example being a feature representing a property of microstructure shown in the reference image. The reference value or values may therefore be derived from the reference image. Additionally, the analysis system 602 comprises a processor and a memory storing instructions that, when executed by the processor, cause the processor to perform the adaptive calibration method described herein, as shown in FIG. 15 and described below.

FIG. 6B is a flow diagram of a first example method of adaptive calibration 608 which is performed by the analysis system 602. The method 608 comprises receiving 610 an image of (i.e. showing) microstructure of a HCF which comprises a splice, wherein the microstructure shown in the image is at or proximate to the splice. In this example, the portion of the HCF referred to in block 600 of FIG. 6A is microstructure of the HCF. The image received in block 610 is captured after the splicer has completed splicing to produce the splice in the HCF (e.g. after the temporary heat-zone of the splicer is de-activated after a splice is produced by the temporary heat-zone).

The method 608 then comprises analysing 612 the image received in block 610 to detect a feature associated with the image, the feature representing a property of the microstructure of the HCF. The feature is detected (in block 612) by comparing the received image, or a portion thereof, to a reference image. The reference image may be a different portion of the received image or a different image. Additionally, method 608 comprises using the feature to compute 614 an adjustment to be made to a parameter of the splicer, and initiating 618 the adjustment of the parameter of the splicer that was computed. In various examples, multiple adjustments are determined and in some cases initiated. The analysis and computation of a splicer parameter adjustment is described in more detail below.

Initiating an adjustment of a splicer parameter (in block 618) refers to causing the adjustment to be applied to the splicer (i.e. triggering the adjustment), such as by adjusting a baseline value stored by the splicer or by adjusting splicing parameters that are defined relative to the baseline values and stored by the splicer. Where splicing parameters are adjusted, this may be implemented by adjusting a splicing 'recipe' that includes such parameters and that is provided to the splicer prior to the splicer performing a splicing operation and implemented for that splicing operation. A splicer may store multiple splicing recipes that can be selected by a user. The splicer reads parameters for a splicing operation from the recipe or from stored parameters. A recipe is a text file, binary file, or any other format, and specifies parameters used by a splicer for a splicing operation.

The image received in block 610 is of a HCF comprising a splice which is produced by the same splicer which has an associated parameter initiated to be adjusted (in block 618) by the adaptive calibration method 608.

By using the method of FIG. 6B, the quality of the splice (i.e. an indication of a loss across the splice) is enabled to be determined accurately, since the received image shows microstructure proximate to the splice. Using the method of FIG. 6B, a feature representing a property of post-splicing microstructure is translated to a splicer adjustment, providing an accurate splicer adjustment which takes into account how the microstructure is affected by a splicer operation (i.e. the production of the splice) on the particular splicing apparatus. Because the microstructure provides an accurate indication of the loss across a splice, the splicer adjustment is computed using an accurate indication of the loss of a splice based on the current conditions experienced by the splicer (which may include environmental conditions such as temperature, pressure and humidity which are not measured by the splicer). It is also enabled that the splicer targets a lower-loss future splice compared to the splice that is imaged, because the adjustment is computed using a feature associated with an image depicting post-splicing microstructure of a HCF, where this microstructure provides an accurate indication of a loss across the splice. A lower loss splice enables the implementing (i.e. laying) of longer lengths of HCF (by providing less overall loss over the length) compared to a case wherein the adaptive calibration method described herein is not implemented. In the context of data centers, this enables a data center to be located in areas that were previously unfeasible, and enables more complex, longer HCF connections to be used by such data centers.

The method of adaptive calibration 608 is enabled because an image of microstructure of a HCF, after a splicing operation is performed to produce a splice in the HCF, can be associated with an adjustment to a parameter of a splicer. The image can be associated with such an adjustment because the microstructure provides an indication of the loss across a splice. A feature associated with the image and representing a property of the microstructure can therefore be detected and used to compute an adjustment to the parameter of the splicer.

The method of adaptive calibration 608 is repeatable for a plurality of images and adjustments, and in some cases for a plurality of splicing operations (i.e. producing a plurality of splices) by a splicer, forming a feedback loop for the splicer in which parameters of the splicer are adjusted to iteratively improve successive splices by the splicer.

Though the method of adaptive calibration 608 is described herein with reference to receiving an image of microstructure of a spliced HCF, in various examples the received image is of a portion of the spliced HCF proximate to the splice and that is not microstructure, being for example cladding of the spliced HCF. Though microstructure provides a comprehensive and accurate indication of the loss of a spliced HCF, the cladding, for example, provides an indication of tilts and alignments of components of the spliced HCF, which also indicate a loss of the spliced HCF. Deformations of the cladding, such as a bulge proximate to the splice, also provide an indication of the loss of the spliced HCF.

In cases wherein the received image is of a portion of the spliced HCF proximate to the splice, the feature detected by the method of adaptive calibration 608 represents a property of the portion of HCF proximate to the splice, for example being a property of microstructure proximate to the splice (as described) or a property of outer cladding of the HCF proximate to the splice.

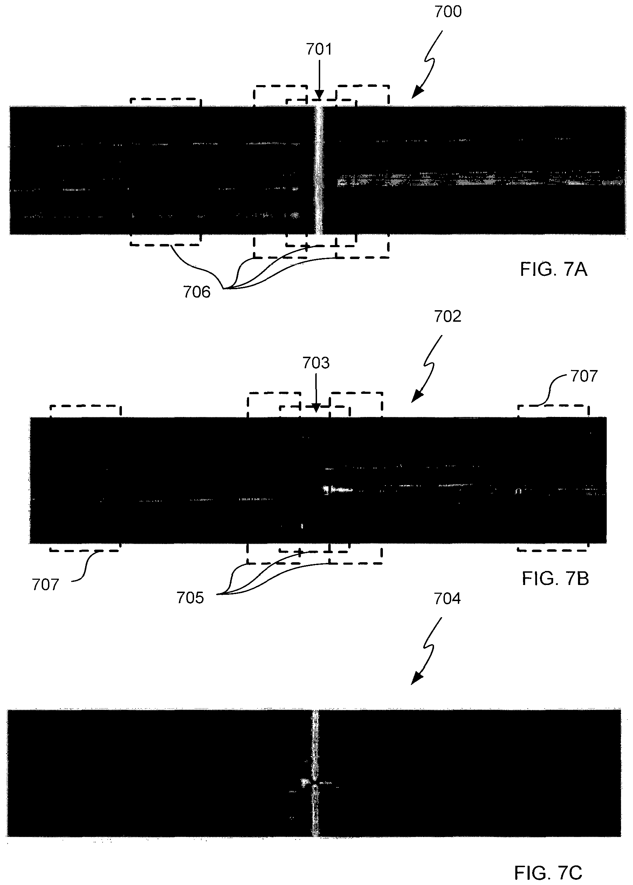

The method of adaptive calibration can be further described with reference to FIGS. 7A-7C which are side-view images pre-splicing and post-splicing of a HCF, and a difference between the pre-splicing and post-splicing side-view images, respectively. Images 700 and 702 in FIGs. 7A and 7B are intensity (or greyscale) images, wherein each pixel of each image represents an intensity of light received from a respective portion of the imaged HCF.

Side view image 700 of FIG. 7A shows two lengths of HCF; a length of HCF on the left of the image 700, and a length of HCF on the right of the image 700, with a gap 701 between the lengths. For example, such an image 700 in some cases corresponds to a side-view image taken by a camera (e.g. camera 406 in FIG. 4) of the lengths of HCF being positioned within a splicer ready for splicing but prior to initiating the temporary heat-zone that produces a splice between the two lengths of HCF. The image 700 shows microstructure of each HCF proximate to the splice as an arrangement of dark and light lines.

Image 702 of FIG. 7B shows the same components as image 700, but after splicing, where the two components are joined via a splice (the dark 'gap' area 703) towards the middle of the image 702. As shown, there is some vertical (relative to the image 702) movement in the microstructure towards the splice, compared to the pre-splicing image 700, with some misalignment of the microstructure on one side of the splice compared to the other. In some examples, image 702 corresponds to the image 600 received in the method of adaptive calibration (in block 610), or alternatively, the image 600 may correspond to a portion of image 702. A number of example portions 705 of the image 702 which may be used in the method are indicated by the dotted outlines in FIG. 7B, some of which show microstructure on both sides of the splice and others of which show microstructure on only one side of the splice (i.e. only one side of the dark area 703). All of these portions 705 are at or proximate to the splice (i.e. they overlap or are proximate to the dark gap region 703).

As described above, the analysis of the received image to detect a feature associated with the image (in block 612), where the feature represents a property of the microstructure of the HCF, comprises comparing the received image, or a portion thereof, to a reference image. The reference image is, in some examples, an image of the microstructure of the HCF prior to splicing, e.g. such as image 700, or a portion 706 of this image. Unlike the portions 705 of the image 702 captured after splicing which may correspond to the received image 600, the portions 706 of the image captured before splicing and which may be used as the reference image need not be proximate to where the splice will be formed (i.e. they do not need to overlap or be proximate to the light gap region 701). In other examples, the reference image may be a portion 707 of the image 702 captured after splicing which is not proximate to the splice (e.g. more than a second threshold distance from the splice). The second threshold distance may be equal to the first threshold distance or may be larger than the first threshold distance (e.g. a multiple of the first threshold distance).

Difference image 704 of FIG. 7C illustrates the differences per-pixel between pixels of the image 700 and corresponding pixels of the image 702. In an example where image 702 is the received image and image 700 is the reference image, difference image 704 may be generated as part of the analysis of the received image to detect a feature associated with the image (in block 612). The differences shown in the difference image 704 are computed by aligning the pre-splicing and post-splicing images 700, 702. The aligning is performed in some cases by computing a best-fit alignment of a portion of the microstructure of the pre-splicing image 700 (the reference image) with a corresponding portion of the microstructure of image 702 (the input image) such that the portion of the microstructure of image 700 is aligned with a corresponding portion of the microstructure of image 702, i.e. such that both portions of the image are of the same HCF microstructure.

The intensity value associated with a pixel of image 702 is then in some cases subtracted from an intensity value associated with a corresponding pixel of image 700, to compute a value that represents an intensity difference between the pixel of image 702 and the corresponding pixel of image 700. This computation is in some cases repeated for a plurality of pixels of image 700 and corresponding pixels of image 702, for example all pixels of image 700 and corresponding pixels of image 702.

In other cases, the intensity value associated with a pixel of image 700 is subtracted from an intensity value associated with a corresponding pixel of image 702, to compute a value that represents an intensity difference between the pixel of image 700 and the corresponding pixel of image 702.

The resulting pixel intensity differences are illustrated in difference image 704. Whilst higher intensities are represented as brighter, whiter pixels in images 700 and 702, and high differences are represented as brighter, whiter pixels in difference image 704, relative to dimmer, more grey or more black pixels, it should be appreciated that any other representation of high values relative to low values and vice-versa could alternatively be used.

The lighter, high-intensity pixels of images 700 and 702 correspond to pixels showing microstructure of the HCF and, in the case of the central gap 701 in image 700, light from the gap. The darker, low-intensity pixels of images 700 and 702 correspond to pixels showing non-microstructure portions of the HCF, such as a jacket of the HCF, material that does not correspond to the microstructure, or cladding.

A corresponding pixel in a second image to a first pixel of a first image refers to a pixel that has a same location in the second image, relative to an aligned portion of the second image, as a location of the first pixel relative to a corresponding portion of the second image to the aligned portion of the first image. The aligned portion of the second image is for example a portion of the microstructure of a HCF in the second image that is aligned with a portion of the microstructure in the first image.

The difference image 704 shows the differences between the HCF components pre-splicing (shown in image 700), and the HCF components post-splicing (shown in image 702). The difference image 704 therefore shows damage and changed alignment of the microstructure of the HCF caused by a splicing operation. FIGS. 7A-7C illustrate a relatively good splice, which would have a relatively low optical propagation loss over the splice if measured. For example, the splice shown in FIG. 7B may have a loss increase, relative to a butt couple of the HCF components pre-splicing, of around 0.00 - 0.10 dB.

The images 700, 702 in both FIGS. 7A and 7B are side-view images of the same HCF components, from the same viewing angle relative to the HCF components. As referred to herein, HCF components includes lengths of HCF that are spliced together to form the HCF after splicing. It should be appreciated that in some cases images are captured that are not side-view images but that still are of microstructure of the HCF pre- and/or post-splicing, and in some cases images are taken by a camera at various rotations of the camera about a central axis of the HCF.

In various examples, factors other than the splicing of the HCF components to produce a resulting HCF are controlled between the taking of the pre-splicing and post-splicing images (700 and 702 respectively), such that an accurate comparison of the microstructure in each image is enabled. These factors for example include lighting conditions and camera parameters.

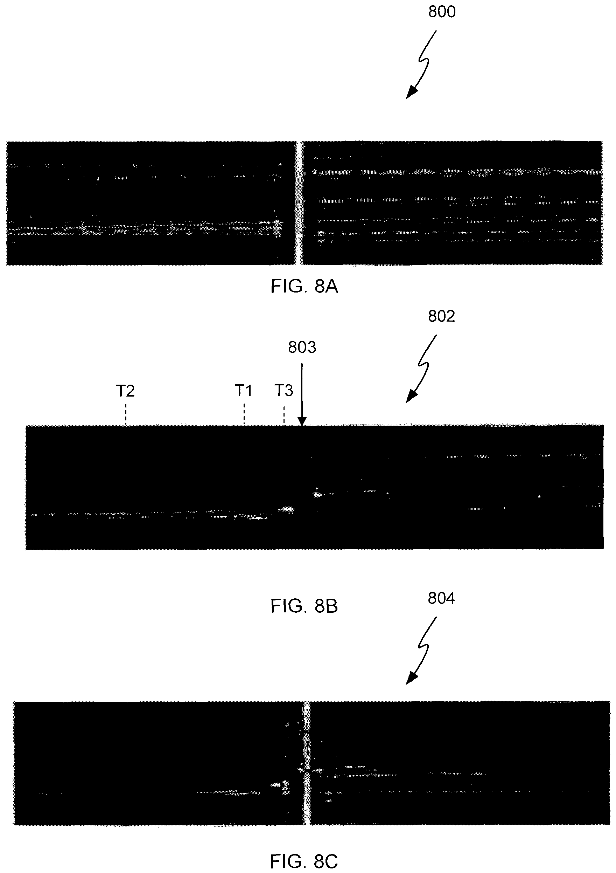

FIGS. 8A-8C are side-view images pre-splicing and post-splicing of a HCF, and a difference between the pre-splicing and post-splicing side-view images, respectively. Similarly to FIG. 7A-7C, images 800, and 802 are intensity (or greyscale) images, and difference image 804 illustrates differences between images 800 and 802. Brighter, whiter pixels represent higher intensities and differences than dimmer, more black and/or more grey pixels. FIGS. 8A-8C illustrate a poor splice compared to that shown in FIGS. 7A-7C, which would have a high optical propagation loss over the splice if measured. For example, the splice shown in FIG. 8B may have a loss of over 1.5 dB, although more generally a poor splice may be considered to be a splice with a loss of over 0.5 dB.

Side view image 800 of FIG. 8A shows two lengths of HCF; a length of HCF on the left of the image 800, and a length of HCF on the right of the image 800, with a gap in between the lengths. For example, such an image 800 in some cases corresponds to a side-view image taken by a camera of the lengths of HCF being positioned within a splicer ready for splicing but prior to initiating the temporary heat-zone that produces a splice between the two lengths of HCF. Both lengths have associated microstructure as shown.

Image 802 of FIG. 8B shows the same components as image 800, but after splicing, where the two components are joined via a splice towards the middle of the image 802. Image 802 depicts microstructure proximate to the splice. As shown, there is significant movement in the microstructure towards the splice and even towards the outer edges of the image, compared to the pre-splicing image 800, with misalignment of the microstructure on one side of the splice compared to the other. Additionally, there are some high-intensity regions of the microstructure close to the splice.

Difference image 804 of FIG. 8C illustrates the differences per-pixel between pixels of the image 800 and corresponding pixels of the image 802, computed by aligning a portion of the microstructure of the HCF in images 800 and 802, and shows that there is a significant change in the microstructure after splicing compared to prior to splicing. This indicates damage, misalignment, and higher optical propagation loss across the splice compared to FIG. 7C.

Having performed the comparison (in block 612) to generate a difference image, the difference image is analysed to determine a feature associated with the image that represents the microstructure property. In an example, the feature is a number or percentage of unchanged pixels in the difference image or a portion thereof. The number of unchanged pixels is a number of pixels in the difference image having pixel intensity differences between aligned pre- and post-splicing images below an intensity threshold. The threshold for an unchanged pixel is in various examples a pixel intensity difference value of 10, 20, or 30 in the 256-value greyscale color format, a percentage of a maximum pixel intensity difference value or any other intensity threshold value. Computing the number of unchanged pixels may be performed excluding pixels of a gap portion between microstructure of pre- and/or post-splice images, such that the gap portion is not taken into account for comparison and for computing an adjustment to be made to a splicer. It will be appreciated that instead of the feature being a number or percentage of unchanged pixels in the difference image or a portion thereof, the number or percentage of changed pixels in the difference image or a portion thereof may be used (where a 'changed pixel' is defined as having a pixel intensity difference that is greater than the pixel intensity threshold).

In examples where the input image includes the microstructure at the splice, rather than just microstructure proximate to the splice, the portion of the input image (and corresponding reference image) that is at the splice may be excluded when detecting the feature (in block 612). Referring back to FIG. 7B, this would result in the exclusion of the portion of the input image at gap 703 and may additionally result in the exclusion of one or more vertical lines of pixels either side of the gap 703. This may improve the detection of the feature and the overall accuracy of the adaptive calibration method because the pixels in the image at the point of the splice may introduce noise. Consequently, in some examples, the microstructure proximate to a splice refers to microstructure located within a first threshold distance of the splice but greater than a third threshold distance from the splice, where the third threshold distance is smaller than the first threshold distance. FIG. 8B shows an example of the first, second and third threshold distances, T1, T2, T3, relative to the position of the splice 803 (T3<T1≤T2). In this way, the microstructure used to compute an adjustment to a splicer can be weighted for determining the adjustment, for example enabling targeted analysis to a region of the imaged HCF in which microstructure damage is for example likely to be more severe (between T1 and T3) than microstructure damage closer to a splice (between T3 and the splice).

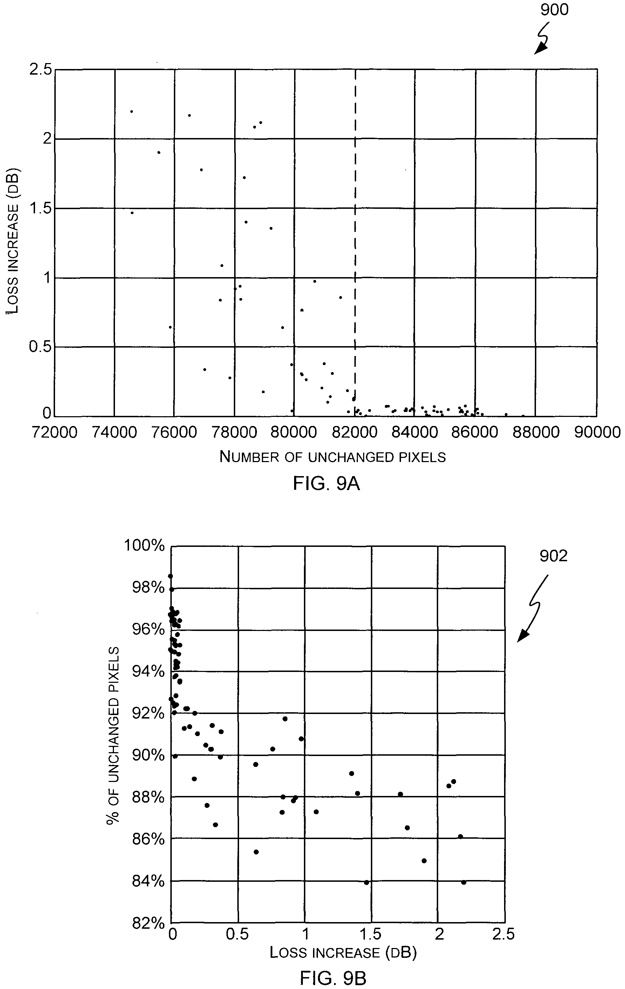

In examples where the detected feature is the number or percentage of unchanged pixels in the difference image, the relationship between this feature and the splice loss is shown by the graphs in FIGs. 9A and 9B.

FIG. 9A is graph 900 showing the number of unchanged pixels against the splice loss (defined as a loss increase as a consequence of the splice, relative to a loss across the HCF components of the spliced HCF when they are butt coupled) of a spliced HCF. Each point on the graph 900 is determined by butt coupling two HCF components, measuring the loss across the HCF components, splicing the HCF components together to form a spliced HCF using a fusion splicer (e.g. such as shown in FIG. 4) and varying the arc temperature (e.g. by varying the arc power and/or duration) used to produce a splice in the spliced HCF. The loss across the spliced HCF is then measured, and compared to the loss across the butt-coupled HCF components. The points on the graph 900 show a clear relationship where, as the number of unchanged pixels increases, the increase in the loss over the splice decreases and splices with more than 82000 unchanged pixels in the difference image (the point indicated by the dotted vertical line in FIG. 9A) have low loss.

FIG. 9B shows the same data as FIG. 9A, but where the number of unchanged pixels is instead plotted as a percentage of the total number of pixels (i.e. the total number of pixels in a difference image which shows pixel intensity differences between aligned images of a HCF post-splicing and pre-splicing respectively). The data illustrated in FIG. 9A comprising a number of unchanged pixels may be converted to data for plotting in FIG. 9B comprising a percentage of unchanged pixels. Chart 902 illustrates that lower loss splices (i.e. those with a smaller increase in optical propagation loss across the splice after splicing) tend to have a higher percentage of unchanged pixels after splicing compared to prior to splicing (e.g. more than 92.5% unchanged pixels).

A pixel intensity difference is associated with how much a portion of the microstructure of a HCF has changed from prior to splicing to after splicing, and provides information associated with microstructure damage and/or misalignment by the splicing. In addition or alternatively to computing pixel intensity differences between images of a HCF prior to and after splicing, visual microstructure damage features such as gaps in the microstructure, a total pixel intensity difference being a sum of pixel intensity differences between pixels of an aligned image of a HCF prior to splicing and an aligned image of the HCF after splicing, a profile of pixel intensity differences, or other features of an image representing a characteristic of the microstructure of the image may instead be used as the detected feature (in block 612).

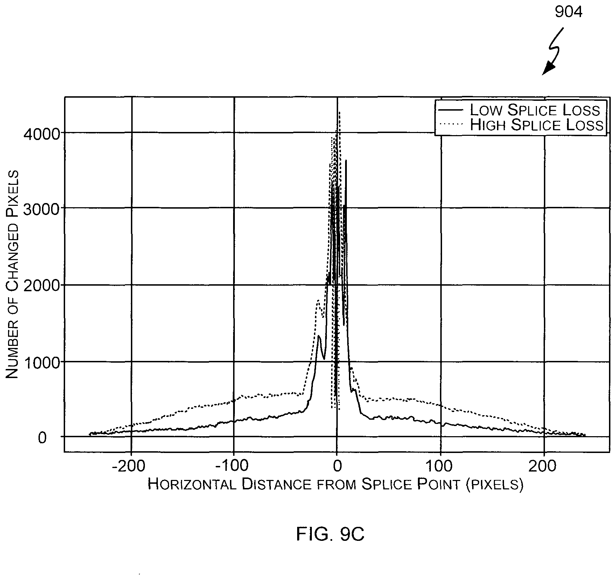

In an example, the feature that is determined from the difference image is a characteristic of a distribution of the pixel intensity differences. FIG. 9C is a graph of two such distributions - one for a low loss splice and one for a high loss splice. Graph 904 illustrates a pixel intensity difference profile, showing a number of changed pixels (having a pixel intensity difference above a threshold pixel intensity difference) in a line of pixels at a particular distance from the splice. Referring back to the example difference images shown in FIGs. 7C and 8C, pixels in a vertical line in the image are all at the same horizontal distance from the splice and so to generate a distribution of summed differences, the number of unchanged pixels from each vertical line of pixels in a difference image are counted and plotted against the horizontal distance (in pixels) from a center of a splice (i.e. a point at the center of the join between two component lengths of HCF) in a side-view image of a spliced HCF.

The dotted line in graph 904 shows a high-loss splice, and the solid line a low-loss splice, relative to each other. It is therefore evident that a higher optical propagation loss over a splice is associated with a broader pixel intensity difference profile (across a HCF and across a splice) with a higher peak pixel intensity difference, relative to a pixel intensity difference profile for a HCF with a lower loss splice.

Having detected a feature associated with the input image and representing a property of the microstructure after splicing (in block 612) using the comparison with a reference image, this feature is used to compute a splicer parameter adjustment (in block 614). As described above, this splicer parameter adjustment may be an adjustment to one or more splicer parameters and may adjust either a baseline value that is stored in a splicer or a splicing parameter that is part of a splice recipe and that is defined relative to a baseline value.

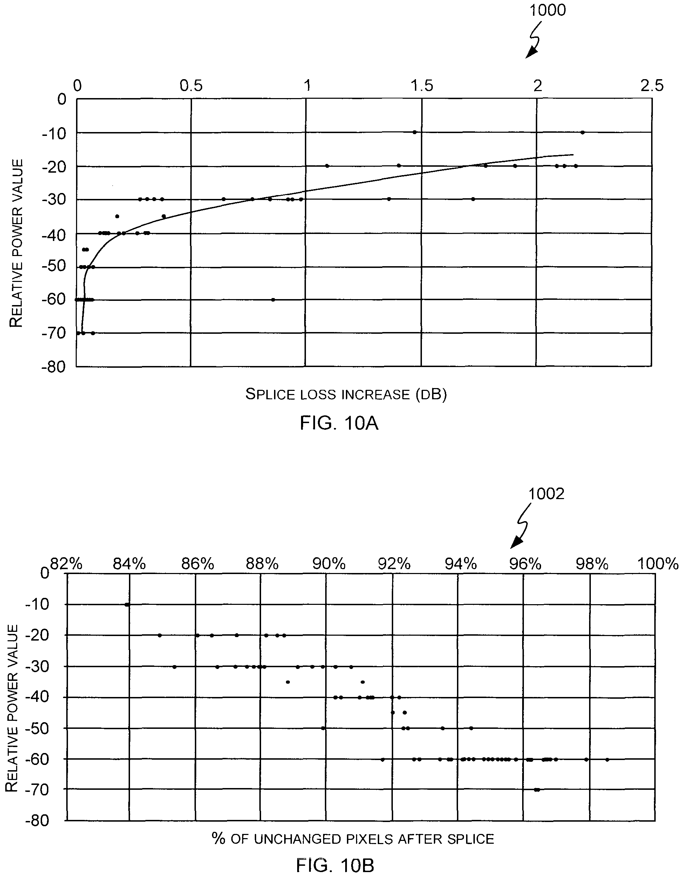

FIG. 10A is a graph 1000 showing the relationship between a fusion arc power of a splicer and an increase in optical propagation loss of the HCF across a splice, after performing a splicing operation using the respective fusion arc power. The fusion arc power is shown as a relative power to a baseline (or reference) power of a fusion arc, and indicates a power of a heating element of a splicer, the heating element configured to produce a fusion arc as the temporary heating-zone. Each point on the chart 1000 represents a splice performed with a respective fusion arc power and a resulting increase in loss across a splice after splicing. The line in chart 1000 illustrates a relationship between increasing fusion arc power and an increase in splice loss (i.e. a lower-quality splice). As such the data from FIG. 10A clearly shows that a parameter of the splicer (fusion arc power) affects the quality of a splice.

FIG. 10B illustrates a similar chart to FIG. 10A but plots fusion arc power against a percentage of unchanged pixels, being pixels with a pixel intensity difference below a pixel intensity threshold value. As described above, when computing the percentage of unchanged pixels, the images prior to and after splicing are aligned (i.e. such that a portion of the microstructure between images is aligned). Each point on the chart 1002 represents a splice performed with a respective fusion arc power and a resulting percentage of unchanged pixels between an image after splicing compared to an image prior to splicing, both images being of the same HCF components. Chart 1002 shows a relationship between fusion arc power and the percentage of unchanged pixels (i.e. a feature associated with the post-splicing and pre-splicing images).

The data from graphs such as those shown in FIGs. 9A-9C, 10A and 10B may be used to generate a model which defines a relationship between the detected feature (from block 612) and a splicer parameter adjustment (in block 614). In an example, the model is a rule and/or lookup table which maps the detected feature (e.g. percentage of unchanged pixels after splice) to a splicer parameter adjustment (e.g. change in arc power and/or duration). In other examples, the model is a machine learning model that is trained using data such as the data used to generate the graphs shown in FIGs. 9A-9C, 10A and 10B, as described in more detail below.

Although the graphs in FIGs. 10A and 10B relate to arc power, the model may in addition, or instead, define a relationship between the detected feature (from block 612) and an adjustment of a different splicer parameter (in block 614). Generally, a splicer is provided with a recipe for splicing which specifies parameters associated with the splicing process, and which the splicer applies when splicing. For example, the recipe may specify a fiber gap, a fiber move speed, distance and/or force, an arc power during fusion, a pre-fuse stage and/or a post-fuse stage of splicing, an arc duration, or any other parameter associated with the splicing process. As described one or more of the parameters specified in a recipe may be defined relative to a stored baseline value for the parameter. Additionally, the splicer may comprise core parameters which are applied regardless of the recipe. The model that is used (in block 614) may define a relationship between the detected feature and any one or more of these splicer parameters (recipe parameters, baseline parameters and core parameters).

Further examples of parameters that are related to a feature of an image of a HCF post-splicing and to an optical propagation loss across a splice produced by the splicer include one or more of: a power of a heating element of the splicer, a heating profile of a heating element of a splicer (being a way such as a geometric shape that defines how and/or where the heating element applies heat to the HCF provided to the splicer), a reference power of the heating element, a relative power of the heating element, a gap between the components of a HCF immediately prior to initiating splicing, a minimum gap between the components of a HCF during splicing, a move speed of the components of a HCF during splicing a length of time during which a temporary heat-zone of the splicer is active during splicing, or any other parameter related as mentioned to an optical propagation loss across a splice of a HCF and to a feature of an image of the HCF post-splicing.

Though it has been described, alongside the examples provided above, that there are numerous image features and splicer parameters that are interrelated with an optical propagation loss across a splice, a further example will now be outlined; the relationship between a pixel intensity difference profile and an optical propagation loss across a splice.

A way of mapping a feature associated with an image i.e. the pixel intensity difference profile, to a loss across a splice is therefore provided. Using for example the other relationships mentioned herein, an adjustment to be made to a parameter of a splicer in order to reduce the loss across a splice for a subsequent splice by the splicer is therefore enabled by the mapping of the feature to the loss.

Additionally or alternatively, the feature associated with the image can be mapped to a strength of the splice, therefore enabling mapping of the feature to an adjustment to be made to a parameter of the splicer in order to increase the strength of a subsequent splice by the splicer. The feature associated with the image can be mapped to the strength of the splice because, in addition to representing changes during splicing that indicate a degree of loss, the feature also indicates changes that are so low, for example, that they indicate that a splice was not strongly formed by the splicer.

Illustratively, there may be less damage to microstructure (indicated by a pixel intensity difference over the microstructure between pre- and post-splicing images) or less deformation of cladding (indicated by a pixel intensity difference over the cladding between pre- and post- splicing images) than would be expected for splicing that was hot enough to cause a strong splice, thereby indicating a weak splice. An indication of a weak splice, for example being a number of pixels with corresponding pixel intensity differences below a threshold value, may therefore be mapped to an adjustment to the splicer such as extending a heating time or increasing a power of the splicer, which would increase the strength of a subsequent splice. As defined herein, a strength of a splice refers to a mechanical strength of the splice, a high strength splice indicating a high resistance to breakage under a same force, and a lower strength splice indicating a lower resistance to breakage under the same force compared to the high strength splice.

Overall, by using the above-mentioned relationships determination is enabled of, based on a feature of an image of a spliced HCF by a splicer, an adjustment to be made to a parameter of the splicer which would result in a lower optical propagation loss across a splice made by the splicer once the adjustment is applied.

As an illustrative example, using the chart 1002 of FIG. 10B as basis for the model, should a percentage of unchanged pixels between images of same HCF components prior to and after splicing respectively be computed to be -86% (in block 612), the splicer adjustment that is determined (in block 614) may be a reduction in relative fusion arc power by 40 units. In another example, should a percentage of unchanged pixels between images of same HCF components prior to and after splicing respectively be computed to be -91% (in block 612), the splicer adjustment that is determined (in block 614) may be a reduction in relative fusion arc power by 20 units. In a further example, should a percentage of unchanged pixels between images of same HCF components prior to and after splicing respectively be computed to be -96.7% (in block 612), the splicer adjustment that is determined (in block 614) may be an increase in relative fusion arc power by 10 units. It will be appreciated that these variables and values are merely exemplary.

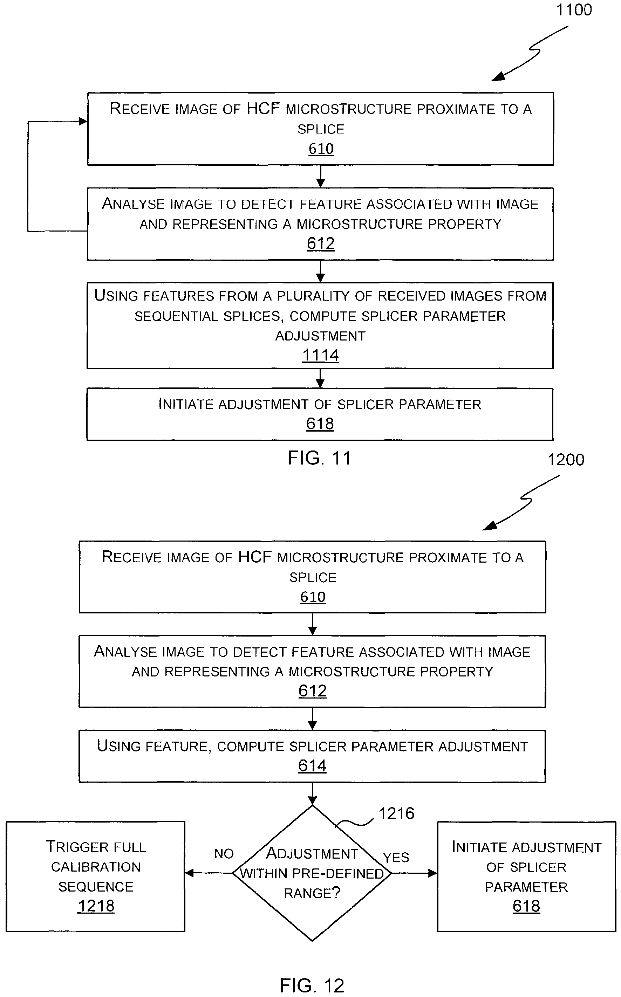

The splicer parameter adjustment that is computed (in block 614) may be dependent solely on the data from the previous splice (i.e. the image received in block 610 and the feature detected therefrom in block 612) or alternatively, the splicer parameter adjustment may be dependent on a number of preceding splices, e.g. based on received images of HCF microstructure for a plurality of splices and the respective features detected from each of the splices in the plurality of splices. FIG. 11 is a flow diagram of a second example method 1100 of adaptive calibration 1100 and which is a variation of the method 608 shown in FIG. 6B and described above. In the method of FIG. 11, the splicer parameter adjustment is computed (in block 1114) using the features detected from images captured after a plurality of preceding splices all formed using the same splicing apparatus (but splicing different lengths of HCF). In an example, a splicer parameter adjustment is computed based on the features from three preceding splices. The preceding splices may be successive splices performed using the same apparatus (e.g. one after the other within a relatively short time period such that environmental conditions are unlikely to have changed considerably). It will be appreciated that numbers other than three may alternatively used. By using data from a plurality of splices in this way, this may improve the stability of the adaptive calibration method and reduce the possibility of an erroneous splice (e.g. an unusually good / poor splice that does not correspond to the standard model) would result in the initiation of adjustment of a splicer parameter.

In a variation of the method shown in FIG. 11, multiple input images of the same splice may be received and a feature determined from each. Using multiple input images of the same splice, for example captured at different angles relative to the fiber (whilst all being side-view images), may improve the accuracy of the adaptive calibration method because the different side-view images may be characterize the changes to the microstructure caused by the splicing operation. As mentioned, though analysis of microstructure has been described and is particularly suitable for computing an adjustment to be made to a parameter of a splicer, in various examples a portion of the imaged HCF that is not microstructure and is instead for example outer cladding (such as outer cladding 102 of FIG. 1), is analysed in a similar way to method 1100. Computing pixel intensity differences, for example, between pre- and post- splicing images of outer cladding of a HCF proximate to the splice provides an indication of a loss of the spliced HCF in a similar way to computing the same for microstructure. This is because pixel intensity differences indicate how for example the outer cladding has changed between prior to and after splicing, which can indicate damage or deformation caused to the cladding during splicing and which therefore increase the loss of the spliced HCF.

A further variation on the method of adaptive calibration is shown in FIG. 12. Whilst the method 1200 shown in FIG. 12 is shown as a variation of the method shown in FIG. 6B, it may alternatively be applied to the method 1100 shown in FIG. 11. In the method of FIG. 12, there is an additional check step 1216 that is performed before adjustment of the splicer parameter is initiated (in block 618). This check step (in block 1216) determines whether the proposed adjustment to the splicer parameter is within a pre-defined range, e.g. smaller than a maximum adjustment value, and the adjustment is only initiated if the proposed parameter adjustment (as computed in block 614) is within the pre-defined range (`Yes' in block 1216). If, however, the computed adjustment (from block 614) is outside the range ('No' in block 1216), e.g. it would result in an adjustment by an amount that is larger than a maximum adjustment value, then instead of applying the adjustment, a full calibration sequence is initiated 1218. This full calibration sequence may involve performing a test splice using solid core fiber, as described above. By using this check step, it may improve the overall splice quality and consistency as a large proposed parameter adjustment may indicate that there is a problem with the splicing equipment (e.g. that it has been dropped or damaged).

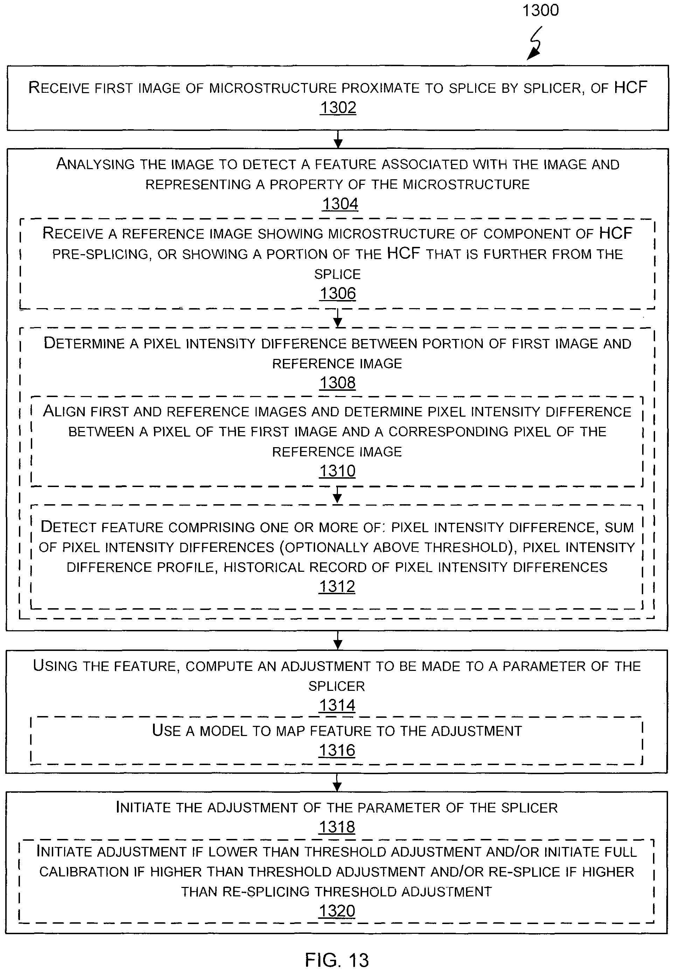

FIG. 13 is a flow diagram of a fourth example method of adaptive calibration 1300. The method 1300 is performed by an analysis system such as analysis system 602 of FIG. 6A. The analysis system is in some cases comprised in the splicer 400 of FIG. 4 or in a device interacting with outputs and/or inputs of the splicer 400 of FIG. 4, such as a device that receives images and/or provides adjustments to parameters of the splicer 400 of FIG. 4. The method 1300 is a variation of the method 608 shown in FIG. 6B and described above. The variations shown in FIGs. 11 and 12 may also be applied to the method 1300.

The method 1300 comprises receiving 1302 a first image of microstructure of a HCF, the HCF comprising a splice produced by a splicer, wherein the microstructure shown in the image is proximate to the splice. The first image is of the HCF after the splicer has completed splicing, may be a side-view image, such as one taken by a camera of a splicer such as splicer 400 of FIG. 4. The first image is taken at any rotation of the camera relative to a central axis of the core of the HCF. In some cases, the image comprises pixels indicating an intensity of light received from respective portions of the HCF (e.g. the image is a greyscale image). The microstructure shown in the first image is in some cases across a splice (i.e. the first image shows microstructure on both sides of the splice), and in an example a portion of the splice is further shown in the first image. In some examples, the microstructure shown in the first image is microstructure that is affected by the splice but is not at the position of the splice itself (e.g. at a distance between the third and first distance thresholds from the splice).

The method 1300 further comprises analysing the image received in block 1302 to detect 1304 a feature associated with the image, the feature representing a property of the microstructure, such as damage, location, and/or orientation of the microstructure, and/or alignment of the microstructure on one side of the splice with respect to microstructure on another side of the splice. The feature is associated with a pixel intensity difference and is determined by computing a difference 1308 between a portion of the image received in block 1302 and a reference image. The portion of the image received in block 1302 is a portion showing microstructure of the first image (the image received in block 1302 and that is captured post-splicing) that is closer to the splice of the HCF depicted in the first image than the first threshold distance.

The reference image that is used in the comparison is one of: 1) a portion of the first image, wherein the portion of the first image is a portion of microstructure of the first image that is further from the splice than the second threshold distance; 2) a second image, wherein the second image is of microstructure of an imaged HCF having the same structure as the spliced HCFs shown in the first image (e.g. which may be captured using the same camera arrangement as the input image); or 3) a third image, showing microstructure of the third image, wherein the third image is of microstructure of a HCF component of the HCF shown in (i.e. of) the first image, prior to splicing by the splicer the HCF component to produce the HCF shown in the first image.

As such, the feature is in some cases determined by using two image portions of the received input image: a first portion which is of the HCF after splicing which is proximate to the splice and a second portion which is further away from the splice than the first portion (i.e. such that there are less impacts on the microstructure by the splice in the second portion, thereby acting as 'baseline' to determine the impact of the splice on the microstructure of the HCF). Where the reference image is not a portion of the first image, the method 1300 comprises receiving the reference image 1306. Using a portion of the input (first) image as the reference image provides an efficient way of carrying out the method 1300 because it is not necessary to receive or access a second image.

By comparing the input image and the reference image, a feature that provides information regarding the impact of the splice on the microstructure of the HCF is enabled can be determined, which enables the method 1300. Comparing the two portions is performed for example by: computing a difference in pixel intensities between the portions, the portions being aligned; comparing a pixel intensity profile of the two portions respectively; and/or comparing pixel colours and/or values above or below a threshold between the two portions.

In some cases, the difference between the portion of the first image and the portion of the reference image is computed by aligning microstructure of the portion of the first image with microstructure of the portion of the reference image and computing a pixel intensity difference between a pixel of the portion of the first image and a corresponding pixel of the portion of the reference image, as outlined in block 1310. In some cases, the difference is computed between a plurality of pixels of the portion of the first image and corresponding pixels of the portion of the reference image. Aligning microstructure as mentioned includes aligning a portion of the microstructure shown in an image with the same microstructure shown in a second image (i.e. a same element of the microstructure of a first image but that has in some cases moved and/or is imaged in a different location in the second image).

The feature associated with the image is then detected 1312, in some cases using the pixel intensity differences as outlined above. The feature in various examples includes at least one of: a pixel intensity difference between a pixel or pixels of images; a sum of pixel intensity differences between images; a sum of pixel intensity differences, each being a difference that is greater than a threshold difference between pixels of images; a pixel intensity difference profile across at least a portion of pixel intensity differences each between pixels of images; and/or a historical record of features, for example being the features mentioned, over a plurality of splices by the splicer.

Though features related to pixel intensity differences have been outlined, it should be appreciated that in various examples there are numerous other features that are computed and that are compatible with the method 1300, for example the feature associated with the image received in block 1302 being a visual indication of microstructure damage, a latent image feature determined by inputting at least the image received in block 1302 into a machine learning model which comprises a layer configured to extract a latent feature from input data, and/or a colour and/or intensity profile.

The method 1300 further comprises using 1314 the feature detected in block 1304 to compute an adjustment to be made to a parameter of the splicer. In some cases, this is performed by using a model 1316 to map the feature determined in block 1304 to the adjustment to be made. Such a model in various examples includes: a machine-learning model, which in some cases is or was trained in a supervised or semi-supervised way to perform the mapping; a rule; and/or a lookup table. In various examples, the model comprises both a machine-learning model and a rule. The model is in some cases configured to map different input features to the model to different output adjustments to be made to a parameter of the splicer, and in some cases is configured to map different input features to a single adjustment to be made to a parameter of the splicer (such that there are fewer output adjustments by the model than a number of provided input features). The model is in an example constructed using empirical features and/or adjustments.

In some cases, the machine-learning model is trained using training inputs, each comprising a feature of an image of microstructure of a HCF, the HCF comprising a first splice that is produced by a splicer. The feature represents a property of the microstructure, and the training inputs each further comprise a ground truth adjustment to a parameter of the splicer which reduces, compared to the first splice, an optical propagation loss across a second splice produced by the splicer after implementing the adjustment. The features are provided as inputs to the machine-learning model, and the ground truth adjustments are used as a target, so that the machine-learning model is trained to predict an adjustment using an input feature according to known machine-learning techniques. Additionally or alternatively to reducing an optical propagation loss, the ground truth adjustment to the parameter increases a strength, compared to the first splice, of a second splice produced by the splicer after implementing the adjustment.

In an example, the model comprises a rule mapping the feature of the image to the adjustment to be made, and the model is created by at least defining the rule.

For example, such a rule could be a decision tree, and include `Rule 1: If percentage of unchanged pixels (unchanged = pixel intensity differences between pre-splice image and post-splice image is below 20) is greater than 92.4%, go to Rule 2', `Rule 2: If mean of total pixel intensity differences (number of pixel intensity differences between pre-splice image and post-splice image having a value in excess of 20) as a percentage of total pixels over last three splices in historical record is greater than 96.7%, adjustment = increase power by 10', or any other rules. It should be appreciated that, whilst the provided examples are in natural language, they are in various examples implemented using code, variable names and/or by any other method. In some cases, the at least one rule comprises at least two interrelated rules.

In some cases, the model comprises a lookup table which is defined by associating the feature with the adjustment. To map a feature to an adjustment, a search is performed for the feature, in various examples being a vector search to determine a closest set of features in the lookup table to the determined feature (where an embedding of the determined feature is compared to embeddings of the features of the lookup table), and a corresponding adjustment in the lookup table is retrieved.

In various examples, the model is defined manually or automatically, for example by capturing a plurality of images of HCFs after being spliced by a splicer, detecting a feature associated with each image of the plurality of images as described above, for example as described with reference to block 1304, and then associating the detected feature with an adjustment to be made to a parameter of the splicer that would result in a higher quality splice, i.e. a splice with a lower optical propagation loss across the splice. Such an adjustment is in some cases computed by using a relationship between a parameter and feature and/or loss of a splice, for example being a relationship as mentioned with respect to the graphs shown in FIGs. 9A-9C and 10A-10B. In some cases the adjustment to be made is computed using such charts, or by using data presented in such charts, for example by computing an equation representing a best-fit of the data and performing a minimization technique using this equation to obtain an adjustment that would improve the loss over a future splice compared to a spliced of an imaged HCF.

In some cases, the adjustment that is mapped and provided by the model is defined such that relatively small adjustments to the range of possible parameter values of the splicer are mapped, which enables an iterative approach to obtain a low loss splice without 'overshooting' the optimal parameter. For example, the mapped adjustment in some cases is 20% of the feasible range in practice, or any other value. Adjustments may for example be made to fibre gap and fibre move distance in increments of 1 µm or in increments of 10-100 nm, and may be made to fusion time in increments of 1 ms or 100 ms. In various examples, any other increment for adjustment is used.

In some cases, the adjustment is defined such that the degree of adjustment varies based on a degree of the property of the microstructure of the spliced HCF that is represented by the feature. For example, the model may be configured to map a feature being a percentage of unchanged pixels relative to a total number of pixels, the percentage being a mean of the last three splices in a historical record, to: a reduction in relative power of a fusion arc of 40 when the mean is greater than 86.5% and smaller than 91%, a reduction in relative power of the fusion arc of 20 when the mean is greater than or equal to 91% and smaller than 96.7%, and an increase in relative power of the fusion arc of 10 when the mean is greater than 96.7%. It should be appreciated that these values and adjustments are merely exemplary.

In some cases, the received image in block 1302 is of a portion of a HCF proximate to a splice by the splicer, that is not microstructure and is instead for example cladding of the HCF proximate to the splice. In these cases, the analysis of block 1304 is instead analysis of the received image to detect a feature representing a property of the portion of the HCF that is proximate to the splice, and the adjustment to the parameter of the splicer is computed in block 1314 using the feature. The feature is detected to be the same metric as described with respect to the microstructure, but is detected with respect to the portion of the HCF proximate to the splice, for example being a pixel intensity difference between pixels of the received image each showing the portion of the HCF (e.g. outer cladding of the HCF) and pixels of a reference image each showing a corresponding portion of the HCF (e.g. the outer cladding of components of the HCF) prior to splicing the HCF.

By using the herein disclosed relationships and methods, an adjustment is enabled to be computed so as to target a reduced, compared to a first splice of the imaged HCF (the image being received in block 1302), optical propagation loss over a second splice of a HCF which is produced by the splicer (that produced the splice in the received 1302 image) after initiating the adjustment.

Finally, method 1300 comprises initiating 1318 (i.e. triggering) the adjustment of the parameter of the splicer. In some cases, the method further comprises causing the splicer to perform a splice using the adjusted parameter. In some cases, the method 1300 is performed by a splicer, and the method further comprises performing a splice using the adjusted parameter.

In some cases, the initiating the adjustment of the parameter 1318 is performed in response to the adjustment being lower than a threshold adjustment (e.g. as described above with reference to FIG. 12), and the method 1300 further comprises initiating 1320 a full calibration of the splicer in response to the adjustment being higher than the threshold adjustment.

In other cases, additionally or alternatively, the method 1100 further comprises initiating 1320, in response to the determined adjustment being higher than a re-splicing threshold adjustment (which in some cases is equivalent to the threshold adjustment used to initiate a full calibration), re-splicing of the hollow core fiber that is shown in the input image (as received in block 1302).

The full calibration is in some cases a calibration of a plurality of parameters of the splicer without using the image received in block 1302, e.g. using a test solid core fiber and the calibration method described above. In some examples, the full calibration corresponds to a reset to a default value of a parameter, or to setting a parameter to a calibration value determined using an image of a HCF during splicing by the splicer. Alternatively, instead of the full calibration and/or re-splicing being triggered in response to a threshold adjustment being exceeded, they may instead be triggered in response to loss thresholds across the splice associated with the feature that is mapped by the model to the adjustment. For example, a feature indicating a loss of less than 0.5 dB but higher than 0.1 dB in some cases triggers a re-splicing, and a loss of greater than or equal to 0.5 dB triggers a full calibration.

Though the method 1300 has been described with respect to a single feature and a single adjustment, in various examples the method 1300 is performed using a plurality of features and/or a plurality of adjustments. For example, block 1304 in some cases comprises using the image received in block 1302, or using a plurality of received images, to detect a plurality of features associated with the image or images. Additionally or alternatively, block 1314 comprises determining a plurality of adjustments to be made each to a respective parameter of the splicer, using the feature or features.

Moreover, though examples of ways to implement the blocks 1304 and 1314 have been described especially with respect to the computing of pixel intensity differences, in some cases a machine-learning model is used instead to provide the functionality of block 1304 and/or block 1314. In this case, the received image in block 1302 is provided as input to the machine-learning model, which for example computes a latent image feature representing a property of the microstructure (thereby performing block 1304) and/or computes an output adjustment to be made to a parameter of the splicer using this latent image feature (performing block 1314). Such a machine-learning model is trained using supervised or semi-supervised techniques and using training inputs comprising images of HCFs (for example images of spliced HCFs) and training ground truth targets comprising adjustments of splicer parameters. The adjustments of splicer parameters are for example determined empirically, are manually provided, or are computed based on a relationship as mentioned herein.

Side-view images have also been described herein, and in some cases the images received in blocks 1302 and/or 1306 are side-view images taken using a camera in a splicer or independently of the splicer. In some cases, the method 1300 further comprises receiving a fourth image showing a different view compared to the first image of block 1302 and/or the second, reference image of block 1306. The different view is of microstructure proximate to the splice of the same HCF that is shown in the first image of block 1302.

The different view is in some cases obtained by another camera for example in the splicer, the camera being in some cases offset by substantially 90 degrees about an axis at the center of the core of the HCF from the angle of the camera that took the first image and/or second image. Alternatively, the different view is obtained by rotating or otherwise moving a camera relative to the HCF.

A plurality of images of different views of the HCF are therefore in some cases received. In such cases, block 1304 further comprises analysing an additional image (being an image with a different view) to the first image to detect a second feature associated with the additional image. The second feature represents a property of the microstructure of the HCF shown in the additional image (and also shown the first image, as the additional and first images are different views of the same HCF). Additionally, in some cases, block 1314 comprises computing the adjustment to be made further using the second feature. Additionally or alternatively in some cases block 1314 further comprises computing a second adjustment to be made to a parameter of the splicer using the second feature.

In this way, more data is obtained regarding the microstructure of the imaged HCF, and therefore the computing of the adjustment using a feature which is detected from this additional data results in a more accurate adjustment in the sense that the adjustment is more likely to fulfil its purpose. Such a purpose is in some examples, as mentioned, targeting a reduced, compared to a first splice of the imaged HCF, optical propagation loss over a second splice of a hollow core fiber which is produced by the splicer after initiating the adjustment. Targeting the reduction in loss in this sense refers to wherein the adjustment is predicted to reduce the loss.

As mentioned above, in some examples, a model is used 1316 to map a detected feature to an adjustment to be made to a parameter of a splicer. The creation of such a model will now be elaborated upon.

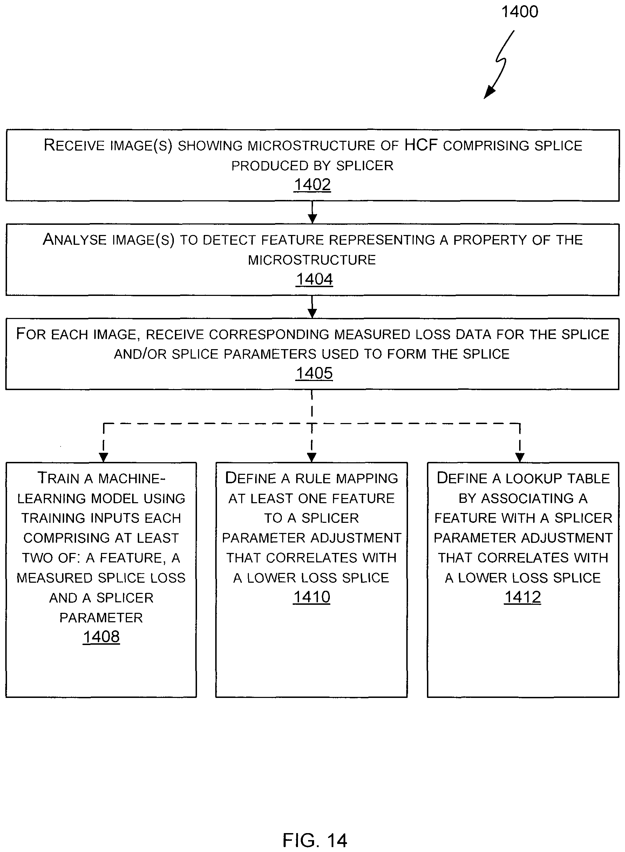

FIG. 14 illustrates a flow diagram of an example method 1400 for creating a model according to the herein disclosed technology. The method 1400 first comprises receiving an image or images of spliced HCFs, each image showing microstructure of a respective HCF comprising a respective first splice that is produced by a splicer, wherein in some cases the microstructure is proximate to the respective first splice. The method 1400 then comprises analysing each image to detect a feature associated (or features, each associated) with the image and that represents a property of the microstructure, in accordance with the examples and methods disclosed herein.

Measured loss data and/or splicer parameters for the splice shown in each image, is then received 1405, and used in combination with the detected feature to construct the model. It should be noted that in some cases the feature, instead of being detected as in block 1404 from an image received in block 1402, is simply received as a feature by the method 1400. As such, the method 1400 in some examples does not comprise the blocks 1402 and 1404. In some cases, the features used to construct the model are a mixture of features that are received and are determined.

If the model comprises a machine-learning model, the machine-learning model is trained 1408 for example in a supervised way and in accordance with known training techniques, by using training inputs each comprising a detected feature representing a property of the microstructure in a HCF proximate to a splicer, a measured splice loss for the splice and splicer parameters used to perform the splice. In other examples, the training data may comprise a first data set relating to a first plurality of splices and comprising, for each splice, a detected feature from an image of microstructure proximate to the splice and splicer settings used to perform the splice (e.g. as shown in FIG. 10B) and a second data set relating to a second plurality of splices and comprising, for each splice, a measured splice loss for the splice and splicer settings used to perform the splice (e.g. as shown in FIG. 10A). It will be appreciated that other combinations of training data sets may alternatively be used. Such known training techniques in some cases include using a gradient descent technique to minimize a loss corresponding to a difference between an output of the machine learning model given a training input, and a corresponding ground truth target value. If the model comprises a rule, the rule is defined 1410 by mapping detected features to splice loss and splice loss to splicer parameters (e.g. as described above with reference to FIGs. 10A and 10B). If the model comprises a lookup table, it is defined 1412 in a similar manner to where a rule is defined and then by storing mappings from features to changes in splicer parameters in a table. In this way a model is provided which may be used in any of the adaptive calibration methods described herein.

Though the creation of the model has been described with reference to microstructure of a HCF, as mentioned herein in some cases the model is constructed using a feature which represents a property of a portion of the HCF proximate to a splice by a splicer. The portion of the HCF is in some cases not microstructure, the feature representing for example a property of outer cladding of the HCF proximate to the splice. In this case, the feature is detected by analysing a received image of the portion of the HCF proximate to the splice, and the feature is associated, mapped, or used to train the model, with a splicer parameter adjustment that correlates with a lower loss subsequent splice by the splicer.

In some examples, the model is usable to compute an adjustment to a splicer parameter that targets an increased splice strength across a subsequent splice by the splicer in addition or alternatively to being usable to compute an adjustment that targets a reduced loss. In these cases, the measured loss data is instead (where the model is usable only to compute an adjustment targeting increased strength) or additionally (where the model is usable to compute an adjustment targeting both increased strength and reduced loss) measured strength data for a splice shown in each image. The ground truth adjustment associated with each image is further instead or additionally a ground truth adjustment that increases strength compared to a splice shown in each image.

Additionally, in cases wherein a splicer parameter is received and associated with a splice shown in a received image, the splicer parameter is in some cases chosen such that it particularly impacts the detected feature associated with the received image, or the detected feature is chosen such that it is particularly impacted by the received splicer parameter. For example, a parameter of arc power is chosen for a feature representing microstructure damage, and a parameter of fibre gap, applied force, and/or fibre move speed are chosen for a feature representing deformations of the spliced HCF relative to HCF components prior to splicing, such as deformations of outer cladding of the spliced HCF (for example a bulge formed at a splice) and/or changes in a degree of tilt of HCF components after splicing compared to prior to splicing. A bulge and/or changes in a degree of tilt are represented for example by pixel intensity difference profiles across the outer cladding of the HCF.

It should be noted that, as described herein, a machine-learning model comprises in various examples any of:
- Feedforward Neural Networks
- Convolutional Neural Networks (CNN)
- Recurrent Neural Networks (RNN)
- Long Short-Term Memory Networks (LSTM)
- Gated Recurrent Units (GRU)
- Radial Basis Function Networks (RBFN)
- Self-Organizing Maps (SOM)
- Deep Belief Networks (DBN)
- Generative Adversarial Networks (GAN)
- Autoencoders (AE)
- Siamese Neural Networks
- Capsule Networks (CapsNet)
- Transformer Networks
- Feedforward Neural Networks
- Convolutional Neural Networks (CNN)
- Recurrent Neural Networks (RNN)
- Long Short-Term Memory Networks (LSTM)
- Gated Recurrent Units (GRU)
- Radial Basis Function Networks (RBFN)
- Self-Organizing Maps (SOM)
- Deep Belief Networks (DBN)
- Generative Adversarial Networks (GAN)
- Autoencoders (AE)
- Siamese Neural Networks
- Capsule Networks (CapsNet)
- Transformer Networks

FIG. 15 illustrates an exemplary computing-based device 1500 in which embodiments of the adaptive splicer calibration method described herein are implemented. As will be appreciated from the above description, computing-based device 1500 in various examples comprises or is comprised in a splicer, or is independent of a splicer.

Computing-based device 1500 comprises one or more processors 1502 which are microprocessors, controllers or any other suitable type of processors for processing computer executable instructions to control the operation of the device in order to perform the adaptive calibration methods described herein (e.g. any or all of the methods of FIGs. 6B and 11-14). In some examples, for example where a system on a chip architecture is used, the processors 1502 include one or more fixed function blocks (also referred to as accelerators) which implement a part of the adaptive calibration method in hardware (rather than software or firmware). Platform software comprising an operating system or any other suitable platform software is in some cases provided at the computing-based device 1500 to enable application software such as adaptive calibration software 1506 to be executed on the device.

Alternatively, or in addition, the functionality described herein is performed, at least in part, by one or more hardware logic components. For example, and without limitation, illustrative types of hardware logic components that are optionally used include Field-programmable Gate Arrays (FPGAs), Application-specific Integrated Circuits (ASICs), Application-specific Standard Products (ASSPs), System-on-a-chip systems (SOCs), Complex Programmable Logic Devices (CPLDs), Graphics Processing Units (GPUs).

Adaptive calibration software 1506 comprises computer executable instructions that, when executed, cause the computer-based device 1500 to perform the adaptive calibration methods described herein (e.g. any or all of the methods of FIGs. 6B and 11-14). The adaptive calibration software 1506 may comprise the model 1508 that is used to compute the adjustment of the splicer parameter and which may have been generated using the method of FIG. 14. The adaptive calibration software 1508 may also comprise image analysis software 1510 that performs the image comparison as part of determining the feature that represents a property of the microstructure.

The computer executable instructions are provided using any computer-readable media that is accessible by computing-based device 1500. Computer-readable media includes, for example, computer storage media such as memory 1504 and communications media. Computer storage media, such as memory 1504, includes volatile and non-volatile, removable and non-removable media implemented in any method or technology for storage of information such as computer readable instructions, data structures, program modules or the like. Computer storage media includes, but is not limited to, random access memory (RAM), read only memory (ROM), erasable programmable read only memory (EPROM), electronic erasable programmable read only memory (EEPROM), flash memory or other memory technology, compact disc read only memory (CD-ROM), digital versatile disks (DVD) or other optical storage, magnetic cassettes, magnetic tape, magnetic disk storage or other magnetic storage devices, or any other non-transmission medium that is used to store information for access by a computing device. In contrast, communication media embody computer readable instructions, data structures, program modules, or the like in a modulated data signal, such as a carrier wave, or other transport mechanism. As defined herein, computer storage media does not include communication media. Therefore, a computer storage medium should not be interpreted to be a propagating signal per se. Although the computer storage media (memory 1504) is shown within the computing-based device 1500 it will be appreciated that the storage is, in some examples, distributed or located remotely and accessed via a network or other communication link (e.g. using communication interface 1514).

Optionally, memory 1504 comprises an image store 1516 which is arranged to store images for analysis by the image analysis software 1510 and/or reference images. The memory 1504 may also comprise an adjustment store 1518 which is arranged to store determined adjustments that are generated by the adaptive calibration software 1506.

The computing-based device 1500 also comprises an input/output interface 1512 arranged to in some cases output display information to a display device which may be separate from or integral to the computing-based device 1500. The display information may provide a graphical user interface. The input/output interface 1512 is also arranged to receive and process input from one or more devices, such as a user input device (e.g. a mouse, keyboard, camera, microphone or other sensor), a cleaver, a camera, and/or splicer. For example, where the computing-based device 1500 is part of the splicer (e.g. part of splicer 400 shown in FIG. 4, the input/output interface 1512 may output the adjustments determined by the adaptive calibration software to the control circuitry in the splicer that controls the operation of the splicer. Where the computing-based device 1500 is separate from the splicer, it may output the adjustments to the splicer via the input/output interface 1512 or alternatively via the communication interface 1514. In such an implementation, the input images may be received by the computing-based device 1500 via the input/output interface 1512 or via the communication interface 1514. As described above, received images may be stored in the image store 1516.

Whilst the method of adaptive calibration is described above in terms of fusion splicing, with the splicer parameters that may be adjusted including the arc power and/or arc duration, the method may also be used with other types of fusion splicer (e.g. with alternative mechanisms to provide the temporary heat-zone).

Alternatively or in addition to the other examples described herein, examples include any combination of the following:
Clause A. An apparatus comprising: a processor; and a memory storing instructions that, when executed by the processor, perform a method for adaptively calibrating a splicer, the method comprising: receiving a first image of a portion of a hollow core fiber, the hollow core fiber comprising a splice produced by the splicer, wherein the portion of the hollow core fiber in the first image is proximate to the splice; analysing the first image to detect a feature associated with the first image, the feature representing a property of the portion of the hollow core fiber proximate to the splice; using the feature, computing an adjustment to be made to a parameter of the splicer, wherein the adjustment is computed so as to target one or more of: 1) a reduced optical propagation loss of a subsequent splice of hollow core fiber which is produced by the splicer after initiating the adjustment, and 2) a higher strength of a subsequent splice of hollow core fiber which is produced by the splicer after initiating the adjustment; and initiating the adjustment of the parameter of the splicer.
Clause B. The apparatus of clause A, wherein analysing the first image to detect a feature associated with the image, the feature representing a property of the portion of the hollow core fibre, comprises: comparing the first image to one of: a reference image, a value derived from the reference image.
Clause C. The apparatus of clause B, wherein the reference image is an image of a corresponding portion of the hollow core fibre to the portion of the hollow core fiber shown in the first image, and wherein the reference image is captured prior to the splice being produced by the splicer.
Clause D. The apparatus of clause B, wherein the reference image and the first image are different portions of an input image showing the portion of the hollow core fiber, wherein the reference image shows a corresponding portion of the hollow core fibre that is further from the splice than the portion of the hollow core fibre in the first image.
Clause E. The apparatus of any of clauses B to D, wherein comparing the first image to a reference image comprises: computing a difference image from the first image and the reference image; and detecting the feature associated with the image, the feature representing a property of the portion of the hollow core fibre, from the difference image.
Clause F. The apparatus of clause E, wherein the difference image is computed by aligning the portion of the hollow core fibre of the first image with the corresponding portion of the hollow core fibre of the reference image and computing a pixel intensity difference between a pixel of the first image and a corresponding pixel of the reference image.
Clause G. The apparatus of clause E or clause F, wherein the feature comprises one or more of: a number or percentage of pixels in the difference image with a pixel intensity difference that is below a pixel intensity threshold; a number or percentage of pixels in the difference image with a pixel intensity difference that is above a pixel intensity threshold; and a plot of pixel intensities in the difference image against distance from the splice.
Clause H. The apparatus of any of clauses A to G, wherein the adjustment to be made to the parameter of the splicer is computed by mapping the feature to the adjustment using a model, wherein the model comprises one or more of: a trained machine-learning model, the machine learning model trained to perform the mapping using training data comprising detected features, one or more of: loss data and strength data, and splice parameters for a plurality of splices performed by the splicer; a rule; and a lookup table.
Clause I. The apparatus of any of clauses A to H, wherein the adjustment comprises an adjustment to one or more of: a baseline arc power of the splicer, an arc power defined relative to the baseline arc power, an arc duration, a gap between fibers in the splicer on splicing, a gap between fibers in the splicer prior to splicing, a fiber movement distance, a fiber movement force, and a fiber movement speed of the splicer.
Clause J. The apparatus of any of clauses A to I, further comprising determining whether the computed adjustment is within a pre-defined range and triggering a full calibration sequence of the splicer in response to detecting that the adjustment is outside the pre-defined range.
Clause K. The apparatus of any of clauses A to J, wherein initiating the adjustment of the parameter of the splicer comprises outputting, to the splicer, data triggering the adjustment of the parameter by the splicer.
Clause L. The apparatus of any of clauses A to clause K, wherein the portion of the hollow core fibre is one of: microstructure of the hollow core fibre, outer cladding of the hollow core fibre.
Clause M. A splicer comprising the apparatus of any of clauses A to L.
Clause N. A method for adaptively calibrating a splicer, the method comprising: receiving a first image of a portion of a hollow core fiber, the hollow core fiber comprising a splice produced by the splicer, wherein the portion of the hollow core fiber in the first image is proximate to the splice; analysing the first image to detect a feature associated with the first image, the feature representing a property of the portion of the hollow core fiber proximate to the splice; using the feature, computing an adjustment to be made to a parameter of the splicer, wherein the adjustment is computed so as to target one or more of 1) a reduced optical propagation loss of a subsequent splice of hollow core fiber which is produced by the splicer after initiating the adjustment, and 2) a higher strength of a subsequent splice of hollow core fiber which is produced by the splicer after initiating the adjustment; and initiating the adjustment of the parameter of the splicer.
Clause O. The method of clause N, wherein the portion of the hollow core fibre is one of: microstructure of the hollow core fibre, outer cladding of the hollow core fibre.

The term 'computer' or 'computing-based device' is used herein to refer to any device with processing capability such that it executes instructions. Those skilled in the art will realize that such processing capabilities are incorporated into many different devices and therefore the terms 'computer' and 'computing-based device' each include personal computers (PCs), servers, mobile telephones (including smart phones), tablet computers, set-top boxes, media players, games consoles, personal digital assistants, wearable computers, and many other devices.

The methods described herein are performed, in some examples, by software in machine readable form on a tangible storage medium e.g. in the form of a computer program comprising computer program code means adapted to perform all the operations of one or more of the methods described herein when the program is run on a computer and where the computer program may be embodied on a computer readable medium. The software is suitable for execution on a parallel processor or a serial processor such that the method operations may be carried out in any suitable order, or simultaneously.

Those skilled in the art will realize that storage devices utilized to store program instructions are optionally distributed across a network. For example, a remote computer is able to store an example of the process described as software. A local or terminal computer is able to access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a digital signal processor (DSP), programmable logic array, or the like.

Any range or device value given herein may be extended or altered without losing the effect sought, as will be apparent to the skilled person.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items.

The operations of the methods described herein may be carried out in any suitable order, or simultaneously where appropriate. Additionally, individual blocks may be deleted from any of the methods without departing from the scope of the subject matter described herein. Aspects of any of the examples described above may be combined with aspects of any of the other examples described to form further examples without losing the effect sought.

The term 'comprising' is used herein to mean including the method blocks or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the scope of this specification.

## Claims

1. An apparatus comprising:
a processor; and
a memory storing instructions that, when executed by the processor, perform a method for adaptively calibrating a splicer, the method comprising:
receiving a first image of a portion of a hollow core fiber (610, 1302), the hollow core fiber comprising a splice produced by the splicer, wherein the portion of the hollow core fiber in the first image is proximate to the splice;
analysing the first image to detect a feature associated with the first image (612, 1304), the feature representing a property of the portion of the hollow core fiber proximate to the splice;
using the feature, computing an adjustment to be made to a parameter of the splicer (614, 1314), wherein the adjustment is computed so as to target one or more of:
1) a reduced optical propagation loss of a subsequent splice of hollow core fiber which is produced by the splicer after initiating the adjustment, and
2) a higher strength of a subsequent splice of hollow core fiber which is produced by the splicer after initiating the adjustment; and
initiating the adjustment of the parameter of the splicer (618, 1318).

2. The apparatus according to claim 1, wherein analysing the first image to detect a feature associated with the image, the feature representing a property of the portion of the hollow core fibre, comprises:
comparing the first image to one of: a reference image, a value derived from the reference image.

3. The apparatus according to claim 2, wherein the reference image is an image of a corresponding portion of the hollow core fibre to the portion of the hollow core fiber shown in the first image, and wherein the reference image is captured prior to the splice being produced by the splicer.

4. The apparatus according to claim 2, wherein the reference image and the first image are different portions of an input image showing the portion of the hollow core fiber, wherein the reference image shows a corresponding portion of the hollow core fibre that is further from the splice than the portion of the hollow core fibre in the first image.

5. The apparatus of any of claims 2-4, wherein comparing the first image to a reference image comprises:
computing a difference image from the first image and the reference image; and
detecting the feature associated with the image, the feature representing a property of the portion of the hollow core fibre, from the difference image.

6. The apparatus of claim 5, wherein the difference image is computed by aligning the portion of the hollow core fibre of the first image with the corresponding portion of the hollow core fibre of the reference image and computing a pixel intensity difference between a pixel of the first image and a corresponding pixel of the reference image.

7. The apparatus of claim 5 or 6, wherein the feature comprises one or more of:
a number or percentage of pixels in the difference image with a pixel intensity difference that is below a pixel intensity threshold;
a number or percentage of pixels in the difference image with a pixel intensity difference that is above a pixel intensity threshold; and
a plot of pixel intensities in the difference image against distance from the splice.

8. The apparatus of any preceding claim, wherein the adjustment to be made to the parameter of the splicer is computed by mapping the feature to the adjustment using a model, wherein the model comprises one or more of:
a trained machine-learning model, the machine learning model trained to perform the mapping using training data comprising detected features, one or more of: loss data and strength data, and splice parameters for a plurality of splices performed by the splicer; a rule; and
a lookup table.

9. The apparatus of any preceding claim, wherein the adjustment comprises an adjustment to one or more of: a baseline arc power of the splicer, an arc power defined relative to the baseline arc power, an arc duration, a gap between fibers in the splicer on splicing, a gap between fibers in the splicer prior to splicing, a fiber movement distance, a fiber movement force, and a fiber movement speed of the splicer.

10. The apparatus of any preceding claim, further comprising determining whether the computed adjustment is within a pre-defined range (1216) and triggering a full calibration sequence of the splicer in response to detecting that the adjustment is outside the pre-defined range (1218).

11. The apparatus of any preceding claim, wherein initiating the adjustment of the parameter of the splicer comprises outputting, to the splicer, data triggering the adjustment of the parameter by the splicer.

12. The apparatus of any preceding claim, wherein the portion of the hollow core fibre is one of: microstructure of the hollow core fibre, outer cladding of the hollow core fibre.

13. A splicer comprising the apparatus of any of claims 1-12.

14. A method for adaptively calibrating a splicer, the method comprising:
receiving a first image of a portion of a hollow core fiber (610, 1302), the hollow core fiber comprising a splice produced by the splicer, wherein the portion of the hollow core fiber in the first image is proximate to the splice;
analysing the first image to detect a feature associated with the first image (612, 1304), the feature representing a property of the portion of the hollow core fiber proximate to the splice;
using the feature, computing an adjustment to be made to a parameter of the splicer (614, 1314), wherein the adjustment is computed so as to target one or more of:
1) a reduced optical propagation loss of a subsequent splice of hollow core fiber which is produced by the splicer after initiating the adjustment, and
2) a higher strength of a subsequent splice of hollow core fiber which is produced by the splicer after initiating the adjustment; and
initiating the adjustment of the parameter of the splicer (618, 1318).

15. The method according to claim 13, wherein the portion of the hollow core fibre is one of: microstructure of the hollow core fibre, outer cladding of the hollow core fibre.
